(19) **Europäisches Patentamt / European Patent Office / Office européen des brevets**

(11) **EP 3 120 680 B1**

(12) **FASCICULE DE BREVET EUROPEEN**

(45) Date de publication et mention
de la délivrance du brevet:
**10.01.2024  Bulletin 2024/02**

(21) Numéro de dépôt: **16179850.9**

(22) Date de dépôt: **18.07.2016**

(51) Classification Internationale des Brevets (IPC):
**A01C 21/00** *(2006.01)*

(52) Classification Coopérative des Brevets (CPC):
**A01C 21/007**

(54) **MÉTHODE DE FERTILISATION AVEC PROCÉDÉ POUR LA PRÉCONISATION DES DOSES D'ENGRAIS PHOSPHORIQUES (DP) POUR GRANDES CULTURES AGRONOMIQUES EN PRÉSENCE DE RÉSIDUS DE CULTURE AU SOL (RCS)**

VERFAHREN FÜR DÜNGUNG MIT EMPFEHLUNG DER DOSEN VON PHOSPHORDÜNGEMITTELN FÜR GROSSE LANDWIRTSCHAFTLICHE ANBAUKULTUREN BEI VORHANDENSEIN VON PFLANZENRÜCKSTÄNDEN IM BODEN

METHOD OF FERTILIZATION WITH PROCESS FOR RECOMMENDING DOSES OF PHOSPHATE FERTILISER FOR LARGE AGRONOMIC CROPS IN THE PRESENCE OF SOIL CROP RESIDUES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité:  **23.07.2015  FR 1501588**

(43) Date de publication de la demande:
**25.01.2017  Bulletin 2017/04**

(73) Titulaire: **Polyor SARL**
**54000 Nancy (FR)**

(72) Inventeur: **Claude, Pierre-Philippe**
**54000 Nancy (FR)**

(56) Documents cités:
**EP-A1- 2 774 467    FR-A1- 2 910 230**
**US-A- 5 668 719**

**Description**

**DOMAINE TECHNIQUE DE L'INVENTION**

Agronomie conseil, et plus particulièrement l'analyse de terres et de végétaux destinés au pilotage des apports aux grandes cultures agronomiques d'engrais N, P et K, ainsi que la microbiologie des sols, et plus particulièrement de l'activité diazotrophe des populations azotobactériennes.

**ÉTAT DE LA TECHNIQUE**

*Préconisation des apports d'engrais P*

La préconisation des doses d'engrais P et K en agronomie est imprécise. Elle s'appuie sur des courbes de réponses *mitscherlichiennes* des rendements aux teneurs en P éventuellement renforcées de doses d'engrais P. Un exemple de ces relations mitscherlichiennes (MITRDT ; Ussiri et al. 1998, et Morel et al. 1992 en France) ;

$$RDT = A \odot [1 - exp(-c \odot (b \odot P + dP))] \qquad (1)$$

lorsque A, b et c sont des coefficients empiriques, RDT le rendement agronomique de la culture (t/ha, qx/ha ou encore g/m2), P la teneur en P "échangeable" du sol et dP la dose d'engrais P, P et dP (mg-P/kg-sol ou kg-P/ha). Il est ainsi possible de rétro calculer dP pour un rendement équivalent à 100% du potentiel de rendement ;

$$dP = (1 / c) \odot ln[c \odot A / p \odot (1 + R)] - b \odot P \qquad (2)$$

lorsque p est le ratio entre les prix des engrais et de la récolte, et R le taux marginal de rendement économique (*marginal rate of return*). On peut ainsi préconiser des dP marginalement de plus en plus faibles selon l'augmentation des teneurs en P des sols.

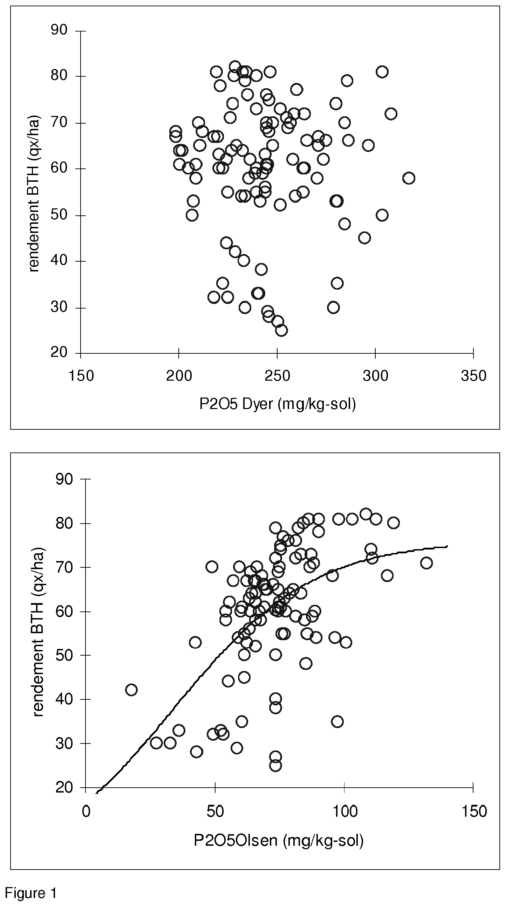

Cette approche MITRDT est problématique. La réponse des RDT à dP n'est pas très marquée (Figure 1) puisque le P apporté est rapidement fixé physico - chimiquement sous forme de composés calco - magnésiques et/ou alumino - ferriques. Hormis les engrais NP starter, les engrais P n'alimentent pas directement les racines, mais enrichissent le sol en vue d'une éventuelle impasse d'engrais P (Comifer 2007). De plus, les relations RDT :: P *mitscherlichiennes* ne valent pas pour toutes les situations agronomiques. Les données pluriannuelles et multi - sites étant très onéreuses à obtenir, il faut compiler différentes études. Or, étant donné les différents RDT, ceux-ci doivent être normalisés, généralement sur une base 100% (eg. Morel et al. 1992,

Colomb et al. 2007). Puisque cette normalisation masque la variabilité inter - annuelle et inter - sites, l'effet agronomique des dP sont peu ou pas détectables ne provoquant qu'un enrichissement graduel et à moyen terme des teneurs en P du sol. Pour le calcul de dP, on utilise aussi parfois des CME-PK (coefficients multiplicatifs d'exportation ; Comifer 2007) appliqués au rendement moyen de la culture plus ou moins exigeante en P et K.

*Diazotrophie* non *symbiotique, P du sol et PUE*

Or, les valeurs de PUE (*phosphorus use efficiency*) de ces apports demeurent faibles, de l'ordre de 10 à 20% (FAO 2008, Sattari et al. 2012), à tel point que la mobilisation du P et/ou la richesse en P des grains n'est plus en soi un objectif agronomique. Au contraire, dans un contexte d'épuisement des gisements de P - ressource non renouvelable, la *réduction* des taux de mobilisation du P par les graines (Rose et al. 2013) est parfois prônée. Le bouclage du cycle du P de manière à retourner au sol le P peu assimilable (eg. acide phytique) pouvant réduire les besoins en P et minorer les doses d'engrais P est donc d'actualité agronomique.

Étant donné le rôle des RCS en conservation des sol, il est surprenant action du PUE n'est pas mieux documenté. Malgré une contribution aux réserves de P du sol (Damon et al. 2014, Thibaud et al. 1988), ces RCS auraient surtout un effet *dépressif sur* PUE, vraisemblablement par entraînement suite à l'effet dépressif de ces RCS sur NUE (*nitrogen use efficiency*) en raison de l'immobilisation de l'Nm (azote minéral ; mg-N/kg-sol).

Pourtant, la fixation biologique non symbiotique du sol est limité par la disponibilité du P (Reed et al. 2007, 2011 et 2013, Binkley et al. 2003, Augusto et al. 2013, Vitousek et al. 1991, Eiselel et al. 1989, Howarth et Marino 1988) en raison d'une diazotrophie très énergivore et grande utilisatrice de P via la phosphorylation de l'ADP en ATP. Pourtant, la contribution de ce P à la diazotrophie non symbiotique en proximité des RCS n'est pas documentée du fait qu'elle fut jusqu'à ce jour perçue comme peu ou pas importante en termes agronomiques, contribuant aux sols supposément que quelques kg N / ha / an. Depuis remise en question (Ladha et al. 2016, Gupta et al. 2006 ; Halsall et Gibson 1983), cette affirmation a néanmoins marquée les esprits, et pAZB n'est toujours pas intégrée aux méthodes de préconisations des engrais N, P et K. Augusto et al. 2013 rapportent une simili courbe MITAZB, sans pourtant pouvoir donc traduire ces réponses mitscherlichiennes en préconisations P ; de plus il s'agit de diazotrophie symbiotique.

D'autres exemples de méthodes de fertilisation similaires sont connus d'après US 5 668 719 A, FR 2 910 230 A1 et EP 2 774 467.

Sigles et définitions

**AZB** : azotobactérisation des résidus de culture cellulosique au sol (RCS) - eg. Claude et Fillon 2004.

**iAZB**ù : indice composé décrivant le potentiel azotobactériens d'un sol, y compris tel qu'affecté par l'azotobactérisation des RCS. Cet indice composé est constitué par l'agrégation de multiples indices simples décrivant divers aspects de ce potentiel ; il pourra in fine servir à déterminer précisément le niveau de rationnement de la dose X (dX) en dose N (dN), contribuant à la réalisation d'une fertilisation raisonnée azotobactérienne.

**pAZB** : potentiel l'activité iazotrophe en en sols arables, y compris en proximité des RCS. pAZB est ici la *différence* en pAZBn et pAZBp, i.e. les rapports des ratios C/N et C/P (rCN, rCP) résidusphériques calculés - ou mesurés, et critiques (c) en terme de métabolites C, N et P assimilables par les microorganismes. L'immobilisation de l'azote du fait d'un rCN supérieur à rCNc à la diazotrophie, pAZBn est désigné comme *positif* ; *in contrario,* l'immobilisation du phosphore du fait d'un rCP supérieur au rCPc, pAZBp est désigné comme *négatif*, d'où la susdite différence pAZBn - pAZBp.

**MITRDT** : relation *mitscherlichienne* (MIT), i.e. non linéaire et multivariable, comportant comme variables dépendante le rendement (RDT) de la culture agronomique, et indépendantes la teneur en P échangeable du sol, et divers niveaux d'apports d'engrais P (dP). La relation atteint un plateau à titre d'optimum (éq. 1), et il est possible de rétro-calculé une dP selon la teneur en P du sol (éq. 2).

**MITAZB** : Idem à MITRDT mais comportant comme variable dépendante l'activité, potentiel ou réel, de la flore azotobactérienne du sol, et en particulier en proximité des RCS, et comme variables indépendantes les quantités de P retourné au sol via les RCS et engrais P (dP) apportées *directement* aux RCS. La relation atteint elle aussi un plateau à titre d'pAZB optimum (éq. 3) ; il est possible de rétro - calculer dP selon en fonction de quantité de P provenant des RCS (éq. 4).

**RCS** : résidus de culture cellulosiques, avantageusement pailleux, au sol, y compris de maïs - grain, bien que les RCS de cultures de tournesol et de colza sont s'avèrent aussi de bon substrats pour l'AZB. Il y a ici trois usages possible de ce sigle ; *RCS* (kg de RCS par hectare), **cRCS** (% de couverture du sol par des RCS), et *iRCS* (indice de dispersion, répartition ou amoncellement des RCS)

**iPAZ :** indice simple servant pour la préconisation de doses d'engrais phosphoriques (dP) selon la présente invention caractérisée en ce que (i) elle s'appuie sur MITAZB plutôt que MITRDT, et (ii) les dP sont appréciablement plus faibles que celles autrement préconisées à titre de fumure de fond PK.

**iVAZ** (cf. FR1501587) : indice de la différence entre les taux d'immobilisation, minéralisation et diazotrophie des résidusphères et rhizosphères post récolte du fait d'une production aérienne de biomasse plus ou moins importante et riche en N par rapport à celle des biomasses racinaires. iVAZ est donc la différence entre deux ratios, rMS - le ratio entre les productions aérienne (RCS) et souterraine (RAC) de résidus de culture post récolte, et rNS - le ratio de leurs teneurs en azote, Nrcs et Nrac, respectivement.

**iVAZc** (cf. FR1501587) : indice végétatif azotobactérien critique correspondant à pAZBc ; iVAZc est estimé empiriquement à partir du potentiel de RDT agronomique attendu ; plus ce RDT sera important, plus iVAZc est élevés, des RDT importants nécessitant des pAZB appréciables.

**d[iVAZ]c** (cf. FR1501587) : différence iVAZ - iVAZc. Un indicateur de la suffisance de l'activité des azotobactéries du sol par rapport à RDT. Une valeur négative de d[iVAZ]c indique que ce potentiel azotobactérien ne suffit pas en soi a assurer RDT et/ou RDN, et qu'un rationnement arbitraire de dX n'est pas opportun.

**dose X** (dX ; kg-N / ha) : soit = [coefficient d'utilisation de l'N spécifique à une variété de la culture x l'objectif de rendement], mais aussi très complexe comprenant une foule *d'écritures opérationnelles* et un certain *bilan prévisionnel d'azote* (Comifer 2011), la plupart de ces écritures devant être grossièrement estimées à l'aide d'abaques plus ou moins bien renseignés.

**dose N** (dN ; kg-N / ha) : dose d'engrais N en équivalent N appliquée à une culture selon sont le potentiel azotobactérien du sol (pAZB) et l'efficacité de l'azotobactérisation des RCS. Dans les faits, dN représente un dX rationnée ; dX" dN.

**dP** (dose P ; kg-P/ha) : quantité de P à apporter *directement* aux RCS, avantageusement sous formes solubles en solutions ou en granulés (Tableau 7), de manière à optimiser pAZB. Selon l'équation (4), dP = -b ⊖Cpoi. dP peut aussi être désigné uPi (g/ha) ou *microdoses* de P, i.e. de l'ordre du kg/ha (-mg/kg).

**dPo** : fraction de Cpoi définissant un apport en équivalents de P, dP, comme suite dP = dPo x Cpoi

**Cco** : quantité de substrat carboné, ici selon Poli et al. 2006 en kg/m3, apporté initialement au sol via le retour des RCS - pour fin de modélisation, j'ai supposé qu'il s'agit à court terme surtout de l'équivalant physicochimique (cf. coefficient de diffusion) du cellobiose.

**Cno** : quantité de substrat azoté, ici selon Poli et al. 2006 en kg/m3, apporté initialement au sol via le retour des RCS - pour fin de modélisation, j'ai supposé qu'il s'agit à court terme surtout de l'équivalant physicochimique (cf. coefficient de diffusion) de l'ammonium.

**Cpo** : quantité de substrat phosphorique, ici selon Poli et al. 2006 en kg/m3, apporté initialement au sol via le retour des RCS - pour fin de modélisation, j'ai supposé qu'il s'agit à court terme surtout de l'équivalant physicochimique (cf. coefficient de diffusion) des phosphates.

**Cpoi** : quantité de P retournée au sol via la les RCS ; a priori, Cpoi = Cpo. Cette variable interne à la modélisation (Tableau 2-a) permet de faire varier la valeur de Cpo selon dP. Cette modulation itérative Cpo ‡ Cpoi ne s'applique pas ici à Cco et Cno, l'invention ne concernant que des uPi.

## DIVULGATION DE L'INVENTION

### Problème technique

Le problème technique provient d'un calcul imprécis des apports d'engrais P préconisés sur la base de relations *mitscherlichiennes* de type MITRDT. Ces relations MITRDT décrivent des augmentations de RDT dues à l'enrichissement en P avec des engrais P. Or, sur un même site, il y a généralement pas assez d'observations pour tracer une courbe MITRDT précises. Il faut donc compiler des observations provenant de nombreux sites / années aux potentiels de rendement très différents, quitte à les normaliser. Cette normalisation cause problème puisque les rendements escomptés sont eux absolus (eg. quintaux / hectare), et non relatifs, tout comme doivent l'être les préconisations d'engrais P.

Les notions de doses P de *renforcement* ou *d'enrichissement,* porte parfois à confusion ; le passage du renforcement à l'impasse en engrais P me semble peu fondé. J'attribue ce flottement à une application trop stricte du paradigme *mitscherlichien,* initialement prévu pour la fertilisation azotée et non phosphatée, à la préconisation de doses d'engrais P.

Bien que les azotobactéries non symbiotiques puissent bénéficier d'une plus grande disponibilité du P, les relations mitscherlichiennes par rapport à celle-ci (MITAZB) ne font pas partie de l'état de la technique, et ne peuvent donc pas se substituer aux usuelles relations de type MITRDT pourtant bien imparfaites. *In fine,* cette problématique contribue à des niveau de PUE trop faibles pour être durables étant donne le caractère non renouvelable des ressources minières phosphoriques.

### Solution technique

Ce sont les teneurs en P des RCS qui surtout alimentent en P - non les cultures, mais bien les flores azotobactériennes *résidusphériques.* Il s'avère que l'activité des azotobactéries telluriques est toute aussi - voire plus, révélatrice de l'état phosphorique du sol que RDT. La calibration des dP selon le potentiel d'activité des azotobactéries résidusphériques (pAZB) s'avérera tout aussi utile en agronomie que la construction fastidieuse et tout relative des courbes MITRDT. Cette solution technique comprendra l'application, le cas échéant, de dP *directement* aux RCS pré enfouissement, et non plus au sol (nu), réduisant la fixation physico - chimiques des engrais P. Ces apports résidusphériques de P seront aussi beaucoup moins importants que les habituels apports de P sous forme de fumure de fonds destinés à enrichir en P à moyen terme les sols.

Le problème mentionné est résolu au moyen d'une méthode de fertilisation phosphorique pour cultures agronomiques selon la revendication 1. Cette méthode comprend l'application d'une dose de phopsphore calibrée selon un procédé pour la calibration des apports aux cultures agronomiques d'engrais phosphoriques comprenant une courbe de réponse mitscherlichienne décrivant l'activité diazotrophe de la flore azotobactérienne dans un sol arable en proximité de résidus de la culture précédente enfouis. Cette courbe de réponse est dite ici de type MITAZB. Cette calibration ce fait en fonction, (i) des teneurs en C, P, voire N, desdit résidus de culture cellulosiques, avantageusement pailleux, au sol (RCS) avant leur enfouissement en pré - semis d'une culture agronomique suivante et, (ii) d'un équivalent de phosphore exogène, dit ici dose P ou dP, proportionnel aux susdites teneurs en C et P des RCS. Ce procédé est aussi caractérisé en ce qu'il nécessite ;

> la détermination de la quantité desdits RCS (RCS), soit indirectement via une relation empirique fonction du rendement de la culture précédente (RDT), soit plus directement au sol via la détermination du degré de couverture du sol par ces résidus (cRCS) ;
> la détermination des teneurs en N (azote) et en P (phosphore) desdits RCS de manière à obtenir Cpoi, i.e. la quantité de P initialement retournée au sol par ces RCS
> le calcul de dP en fonction de Cpoi capable d'assurer que le niveau d'activité diazoptrophe en proximité desdits résidus de culture une fois enfouis (pAZB) maximale.

La détermination de %P peut ce faire lorsque la culture précédente est encore sur pieds de manière à calculer dP avant la récolte et le retour des RCS. Cette détermination anticipe de dP est logistiquement avantageuse. Il et aussi possible d'échantillonner les RCS toujours sur pieds une fois la maturité physiologique atteinte (BBCH 75-77). L'utilisateur dispose donc d'environs trois semaines, dans la cas d'une culture d'hiver telle que blé tendre en France, avant la récolte, voire de 4 à 5 semaines avant l'enfouissement des RCS, pour obtenir des valeurs $\%P_{rcs}$ et de Cpoi.

Le niveau d'activité diazoptrophe en proximité desdits résidus de culture une fois enfouis (pAZB) est défini comme l'équilibre entre l'immobilisation nette de l'azote du sol, phénomène favorable à ladite activité diazotrophe, et l'immobilisation nette du phosphore du sol, phénomène défavorable à ladite activité diazotrophe. Cet équilibre entre l'immobilisation nette de l'azote du sol, favorable à la activité diazotrophe, et l'immobilisation nette du phosphore du sol, défavorable à la activité diazotrophe est défini formellement comme le rapport entre pAZBn et pAZBp (pAZBn / pAZBp), et plus avantageusement comme la différence entre pAZBn et pAZBp (pAZB - pAZB). pAZB -n et -p sont eux, respectivement définis comme les ratios rCN/rCNc et rCP/rCPc, i.e. les rapports entre ratios C/N (ou C/P) de la résidusphère à l'équilibre et C/N (ou C/P) critique en dessus du quel l'azote (ou le phosphore) est libéré sous forme minéral (minéralisation).

Le calcul de dP en fonction de Cpoi et d'un coefficient b issue d'une relation MITAZB de type -

$$pAZB = A \ominus [1 - \exp(-c \ominus (\underline{\textbf{\textit{b}}} \ominus Cpoi + dP))]$$

lorsque dP et un équivalent du P apporté aux RCS et/ou au sol affectant pAZB, et dont la valeur est comprise entre 0,10 et 0,50, plus particulièrement entre 0,15 et 0,30, et avantageusement ici d'environs 0,20, peut être effectué comme suite ;

$$dP = -\underline{\textbf{\textit{b}}} \times Cpoi$$

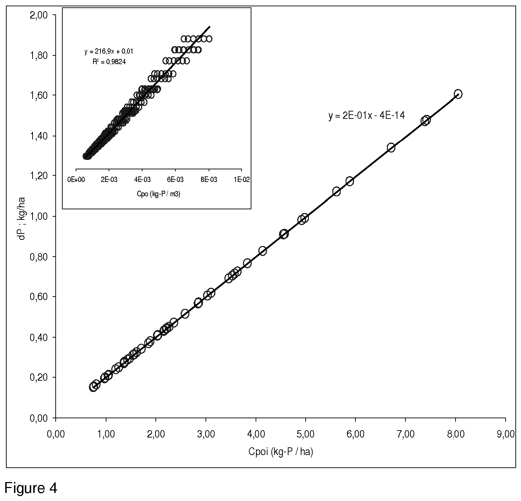

dP pouvant être exprimé en kg-P par m3 de sol, mg-P / kg-sol, ou encore en kg-P par hectare une fois les conversions unitaires nécessaire effectuées (eg. Figure 4).

La quantité des résidus de culture cellulosiques au sol (RCS) est déterminée indirectement à partir du rendement de la culture précédente (RDT) selon des relations empiriques de type ;

$$RCS = [\textbf{\textit{a}} \times RDT + \textbf{\textit{b}}]$$

ou encore plus directement via la détermination préalable du degré de couverture du sol (cRCS ; %), RCS pouvant être déterminé par des relation empiriques de type ;

$$RCS_{BTH} = \boldsymbol{p} \times exp(\boldsymbol{q} \times cRCS)$$

sachant que a, *b, p* et q sont des coefficients de régressions spécifiques au différents types de RCS. Plus particulièrement, à titre d'exemple, ces relations empiriques peuvent avantageusement être les suivantes ;

$$RCS_{BTH} = [0,911 \times RDT + 164]$$

$$RCS_{maïs} = [1,51 \times RDT + 3,7 - RDT]$$

$$RCS_{sorgho} = [2,56 \times RDT + 0.4 - RDT]$$

$$RCS_{céréales} = [2,13 \times RDT + 1,1 - RDT].$$

ou encore ;

$$RCS_{BTH} = 0,0633 \times exp(0,0493 \times cRCS) \mid R2 = 0,9275$$

$$RCS_{Maïs} = 0,0519 \times exp (0,0554 \times cRCS) \mid R2 = 0,8647$$

$$RCS_{Tournesol} = 0,0015 \times cRCS^2 - 0,003 \times cRCS + 0,378 \mid R2 = 0,9928$$

Les cultures agronomiques concernées sont des grandes cultures agronomiques d'hivers choisies parmi un groupe de cultures comprenant les céréales, y compris le blé, l'avoine, le seigle, le triticale, l'orge, le colza, le lin, ou encore toute autre grandes culture agronomique pouvant être semis en présence de résidus de culture cellulosiques, avantageusement pailleux, au sol.

Selon l'invention, dP est sous forme soluble et appliquée par pulvérisation liquide directement aux RCS avant leur enfouissement, avantageusement en pré - semis d'une grande culture agronomique. dP peut aussi être sous forme pulvérulente applicable par pulvérisation solide directement aux résidus de culture cellulosiques au sol avant leur enfouissement, avantageusement en pré - semis d'une grande culture agronomique.

Dans le cadre de cette méthode de fertilisation phosphorique, il est aussi possible que les résidus de culture cellulosique au sol soient bactérisés à l'aide d'une préparation bactérienne réputée capable d'augmenter l'activité diazotrophe, voire l'activité de réduction de l'acétylène (ARA), du sol en proximité desdits résidus de culture une fois enfouis, par exemple selon Claude et Fillon 2004. Mieux, la préparation bactérienne contient des biomasses bactériennes capables de minéraliser partiellement en P inorganique le P organique, notamment sous forme de sels d'acide phytique ; plusieurs biomasses bactériennes de ce type existantes en ce sens sont rapportées dans la base de connaissance, à savoir par Idriss et al. 2002.

La préparation bactérienne peut être combinée avec dP au sein d'une même bouillie pulvérisable directement sur lesdits RCS. L'osmotolérance relative de ces biomasses peut être assurée via EP2647695 concernant des inocula comprenant des bactéries moyennement halophiles.

*Avantages apportés et activité inventive*

Les relations de type MITRDT ne sont plus nécessaires. pAZB étant limité par la disponibilité du P et donc un meilleur indicateur des besoins en P du sol, notamment s'il y azotobactérisation des RCS, elles sont remplacées par des relations de type MITAZB. L'effet des microdoses de P (uPi) appliquée directement aux RCS sera tout autant, voire plus appréciable que celles des dP plus conventionnelles et massives appliquées au sol ; elles contribueront donc à la conservation de la ressource non renouvelable que sont les dépôts miniers de P.

Pour ce qui concerne d'autres éléments de l'état de l'art. US 5 668 719 ne décrit pas RCS provenant de la culture précédente au temps t, mais la quantité de RCS provenant de la culture suivante au temps t+1, ni de mesurer %P des RCS (*idem* Comifer 2007, 2011). La présente invention diffère aussi de EP 2 774 467 non seulement en ce qu'elle comprend une courbe de réponse MITAZB, mais en ce que le P des RCS de la culture *précédente* est dosé, et cela contrairement aux habitudes de l'agronome cherchant à mettre en oeuvre la méthode du bilan (Comifer 2007, 2011). Le fait que l'effet des teneurs en P des RCS sur la culture suivante ne fasse pas partie intégrante de la méthode du bilan s'explique par la sous estimation du potentiel azotobactérien du sol (Ladha et al. 2016) ; de ce mépris pour le potentiel azotobactérien du sol découle en bonne partie le problème technique.

Enfin, notons que les engrais P minéraux connus à ce jour sont de trois (3) types ;

> fumures P de fond granulaires appliquées directement au sols, indépendamment des RCS, et encore moins de leurs richesses relatives en P ;
> engrais NP starter granulaires ou liquides appliqués (en bandes) en proximité des semences au semis, généralement de cultures de printemps telles que le maïs ;
> engrais P foliaires liquides en formulation miscibles dans l'eau et ne comprenant dans ce cas qu'au plus quelques kg-P/ha à titre de doses - hectare

Ces différentes options ne ciblent pas les RCS. Au contraire - et même s'il s'agit d'applications granulaires au sol, il est toujours expressément recommandé que le sol soit "nu" (i.e. dépourvu de RCS ; cf. Granoligoù PB29 et PZ50 - Tableau 7). Donc, et bien que la pulvérisation liquide d'engrais P soluble est une technique courantes, elle n'a jamais ciblée les RCS. Au contraire.

## BRÈVE DESCRIPTION DES DESSINS ET FIGURES

**Figure 1** : Les corrélations entre le rendement d'une culture agronomique (RDT) et la disponibilité du P dans le sol, eg. Dyer ou Olsen, sont vagues. (*Haut*) 107 points variables RDT (blé tendre d'hiver - BTH) : $P_2O_{5Dyer}$. (*Bas*) idem, mais par rapport à $P_2O_{5Olsen}$ Ces données proviennent d'une compilation des rendements moyens pour l'ensemble des départements et régions françaises (données Agrestes, Ministère de l'Agriculture, France) adjoints aux teneurs $P_{Olsen}$ et $F_{Dyer}$ correspondants. Ces valeurs proviennent de la Base de Données d'Analyses de Terre (BDAT : Gissol - Groupement d'intérêt scientifique pour les sols).

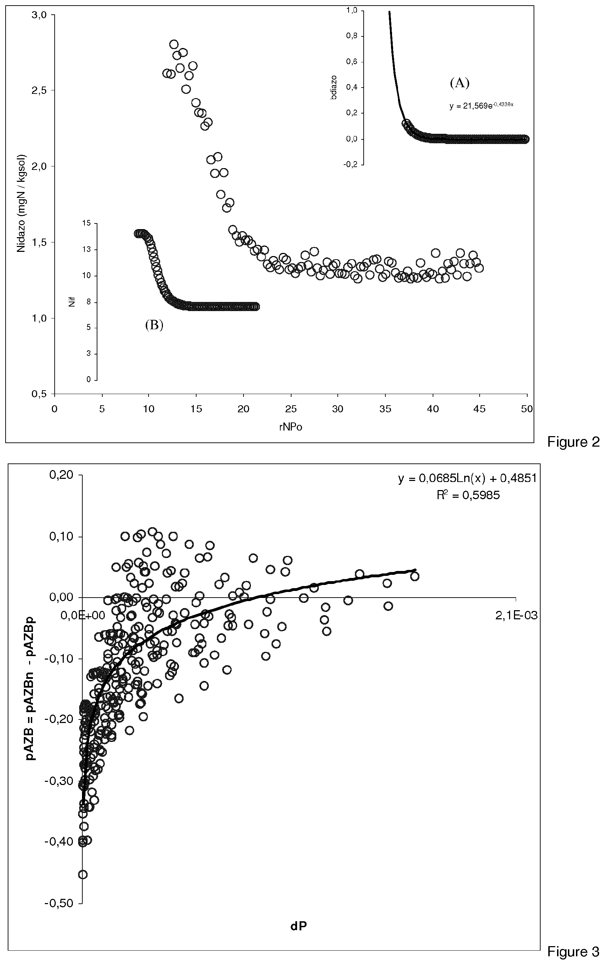

**Figure 2** : Module de rétroaction négative de la diazotrophie non symbiotique de la flore azotobactérienne du sol en présence de RCS. Deux type de rétroactions ; la première tenant compte d'une accumulation graduelle de l'Nm au delà de 14 mg-N / L de solution du sol (1mM-N) capable de réduire appréciablement le fonctionnement de Nif (en abîme basse), et la deuxième fonction en puissance négative du ration NP des résidus de culture au moment de leur enfouissement (rNPo ; en abîme haute). Cette double rétroaction permet de maintenir la contribution de l'activité azotobactérienne (Ndiazo), ici sans l'action directe des éventuels inocula azotobactériens, à un régime a priori modeste en accord avec l'état de l'art.

**Figure 3** : Potentiel azotobactérien (pAZB) du sol selon l'augmentation de l'apport de P proportionnel à Cpoi (kg-P / m3 de sol), i.e. l'apport de P au sol provenant des résidus de culture provenant de la culture précédente. Cette apport supplémentaire de P, dP, proportionnel à Cpoi, permet d'atteindre des pAZB égale à 0,00, sachant qu'pAZB = pAZBn - pAZBp, le pAZB négatif étant ici progressivement réduit en raison de la diminution du ratio rCP / rCPc dictant l'immobilisation du P. En effet, ici dP réduit rCP sans affecter rCPc qui est lui strictement fonction de la qualité des résidus de culture avant l'application de l'équivalent dPo. Le texte de la description explicite plus en détails cette action de dP sur pAZB.

**Figure 4** : Courbe de calibration des équivalents P, dP (kg-P / ha), à apporter à Cpoi au moment de l'enfouissement des résidus de culture cellulosiques au sol de manière à ce que pAZB atteigne approximativement 0,00, soit ici le plein potentiel de l'activité azotobactérienne non symbiotique du sol du fait d'un certain équilibre entre l'immobilisation de l'azote et la non immobilisation du P ; cette notion est explicitée dans le texte. Notons que dP représente ici constamment 20% de Cpoi, ce qui est facilement réalisable en agronomique, Cpoi ne dépassant pas 7 - 10 kg-P / ha / année. dP ayant permit l'esetimation du coefficient b (équation 3), ces apports de P pourront être exprimée en dP (mg-P / kg-sol, ou kg-P / ha).

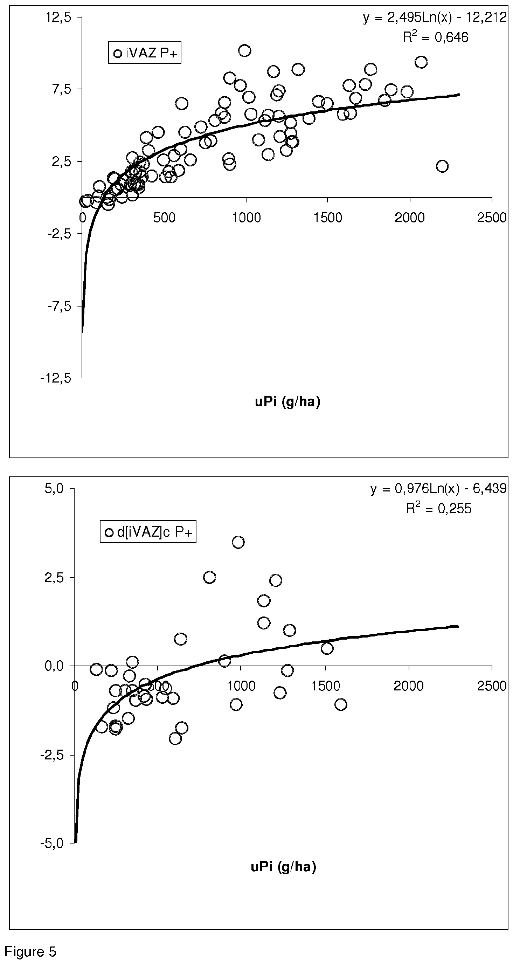

**Figure 5 :** Progression du niveau d'activité azotobactérienne en sol arable selon les indices iVAZ et d[iVAZ]c (FR1501587) en fonction de uPi (g-P/ha). Les traitements 3 (sans P') et 5 (avec P$^+$), et 10 (sans P') et 11 (avec P$^+$) sur blé tendre d'hiver (BTH) en présence de RCS pailleux sont ici concernés (cf. Tableau 8). Les données brutes et les description de ces traitements proviennent de la station expérimental de Rothamsted (R-U ;

http://www.era.rothamsted.ac.uk/ ; Dyke et al. 1983 et Hart et al. 1993) pour des assolements de BTH sur deux campagnes successives (ww) et de blé sur RCS de blé en continue depuis. Il est ainsi possible d'estimer un équivalent uPi connaissant les teneur en P du sol, les quantités de RCS pour P$^+$ et P$^-$, ces traitements 5/3 et 11/10 ne différant qu'à cet égard. A noter aussi que la progression d'iVAZ et de d[iVAZ]c = iVAZ - iVAZc selon uPi est comparable à celle de pAZB prévue à la Figure 3. Ces teneurs en P n'interviennent pas dans le calcul d'iVAZ et iVAZc ; a priori, uPi et iVAZ sont donc indépendants.

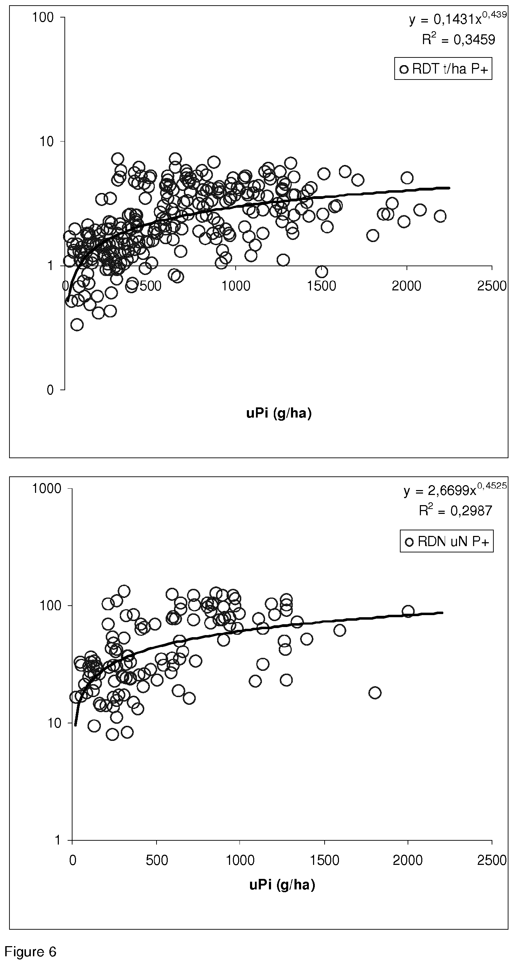

**Figure 6** : La progression des rendements agronomiques (RDT) et protéiques (RDN) de BTH sur RCS et selon uPi (g-P/ha) est appréciable (cf. Tableau 8). Il s'agit donc d'une compilation de données provenant de différentes sections (0, 1, 2 ... 9 ; données brutes de la station expérimentale de Rothamsted (R-U) http://www.era.rothamsted.ac.uk/ ; Dyke et al. 1983 et Hart et al. 1993) pour des assolements de blé sur RCS de blé sur deux campagnes successives et en continus depuis 1968.

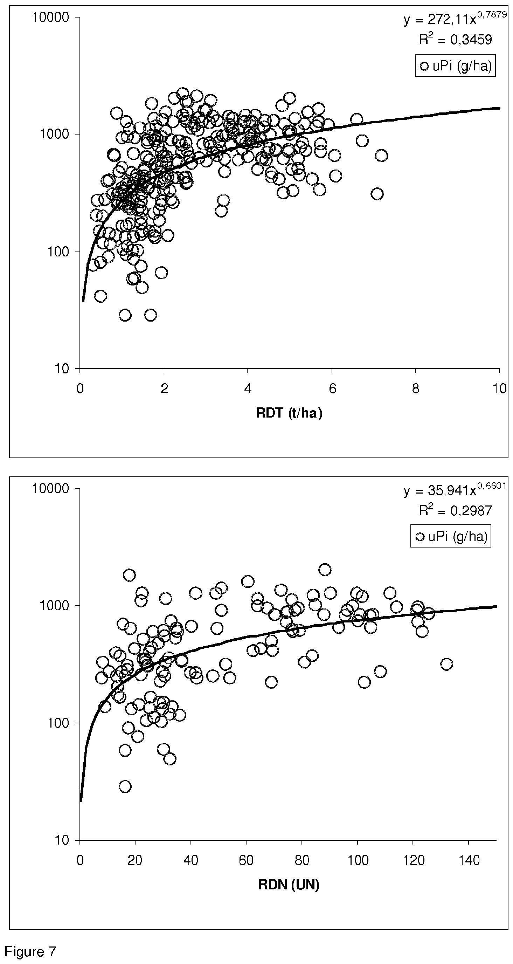

**Figure 7 :** Idem à la Figure 6, mais exprimant ici les niveaux d'uPi (g-P/ha) associés à des niveaux de RDT et RDN grandissant. On apprécie mieux ainsi les microdoses de P (uPi) associées, nécessaires en sorte, aux niveaux de rendement de la parcelle. Voir en ce sens le rapprochement avec la Figure 4 qui elle exprime dP (alias uPi) en fonction de Cpoi proportionnel à la quantité de RCS au sol.

## MODE DE RÉALISATION PRÉFÉRÉ DE L ÎNVENTION

Le P apporté directement aux RCS peut représenter de 10 à 25% du P apporté au sol par les RCS. Ce P peut être apporté par pulvérisation liquide *directement* aux RCS avant leur enfouissement à l'aide de solutions de P habituellement destinées au feuillage. Au Tableau 1 une gamme de scénarii comportant de 4 à 9 t de RCS, des rCNo de 33 à 125, ainsi que des reliquats d'Nm automnaux de 10 à 25 mg-N/kg-sol, les RCS étant enfouis avantageusement à l'automne en pré - semis d'une culture hiver telle que le blé. Différents taux de couverture du sol (cRCS) ont été réalisés. Il n'est donc pas impératif à ce stade de préciser l'espèce des RCS, bien qu'à terme des courbes de calibration de dP :: Cpoi (Figure 4) pour chaque type de RCS seront proposées.

### *Description de la modélisation iPAZ-R*

*Les différents scénarii d'enfouissement de RCS (Tableau 1)*

Les 1 500 scénarii décrits statistiquement au Tableau 1 sont placés dans un fichier - data iPAZ.txt.

**Tableau** 1 : Données initiales pour le modèle iPAZ-R - data iPAZ.xls

| Echantillon | Unités | Minimum | Maximum | Médiane | Moyenne | écartype (n-1) | Moynne géom. |
|---|---|---|---|---|---|---|---|
| RCS | kg/ha | 3947 | 9000 | 6421 | 6360 | 1791 | 6094 |
| cRCS | % | 8,00 | 60,00 | 35,00 | 32,80 | 18,51 | 26,50 |
| dmm | mm | 13,87 | 31,88 | 21,79 | 21,26 | 5,64 | 20,52 |
| iEE-4 | pixels | 1,41 | 4,38 | 2,50 | 2,50 | 0,88 | 2,35 |
| iRCS | sans unités | 26,00 | 140,00 | 46,00 | 55,40 | 32,61 | 48,26 |
| rCNo | sans unités | 33,00 | 125,00 | 75,00 | 76,60 | 33,18 | 68,85 |
| RDT | g/m$^2$ | 42,39 | 306,81 | 171,83 | 168,66 | 93,70 | 135,63 |
| Nrcs | % | 0,336 | 1,273 | 0,560 | 0,686 | 0,340 | 0,610 |
| ppmNm | mg/kg-sol | 10,72 | 25,44 | 19,71 | 19,24 | 4,16 | 18,75 |
| dPo | kq/ha | 0,010 | 0,250 | 0,125 | 0,127 | 0,083 | 0,085 |

Tous les cas de figures de retours de RCS de grandes cultures telles que le blé, le colza et le maïs sont couverts. Dix (10) niveaux de RCS allant de 4000 à 9000 kg/ha sont croisés avec six (6) différentes doses de P (dP) allant de l'équivalent de 1 à 25% la quantité de P retournée au sol par les RCS, et cinq (5) niveaux de richesse relative en N exprimées sous forme de ratios C/N (rNCo). Il y a donc a priori 10 x 6 x 5 = 300 observations simulées. Pour démontrer que l'indice iPAZ ne dépend *pas* des teneurs en N reliquats automnaux, j'ai aussi inclus cinq (5) valeurs aléatoires de tels reliquats (mg/kg) variant de 10 à 25. Une régression linéaire de pAZB sur ces variables démontra qu'iPAZ n'est pas fonction, même partiellement, de tels reliquats ; il n'y a donc pas redondance avec d'autre type d'indices intégrant des reliquats d'Nm (eg. EP2942621).

Les résultats de ces modélisations iPAZ-R (Tableaus 2-a, 2-b et 2-c) sont exprimés en terme de concentrations (kg / m³ de sol ; Poll et al. 2006) de carbone, d'azote et de phosphore au moment de l'enfouissement soit, Cco, Cno et Cpo, respectivement ; les ratios C/N, C/P et N/P à ce moment, soit respectivement rCNo, rCPo et rNPo, peuvent ainsi être calculés et comparés aux ratios critiques correspondant, rCNc, rCPc et rNPc, afin de calculer l'pAZB ;

$$pAZBn <- rCN / rCNc$$

$$pAZBp <- rCP / rCPc$$

$$pAZB = pAZBn - pAZBp$$

Cette modélisation comprend les concentrations (kg / m³ sol ; Poll et al. 2006) de carbone, d'azote et de phosphore 90 jours post enfouissement (jpe) soit Cn, Cn et Cp, respectivement. Le modèle tente de décrire l'effet de l'équilibre entre l'(im)mobilisation de l'azote (favorable) et du phosphore (défavorable) sur l'activité azotobactérienne non symbiotique. rCNc et rCPc sont, respectivement, les ratios C/N et C/P critiques pour la biomasse résidusphérique au delà des quels la minéralisation du N et P ne pourront libérer de N et/ou de P minéral ; ces valeurs critiques sont calculées à partir des équations proposées par Manzoni et al. 2008 ;

$$rCNc = 2,3475 \times cCNo^{0,7452}$$

$$rCPc = 2.3223 \times rCPo^{0,8430}$$

$$rNPc <- rCPc/rCNc$$

*Établissement des coefficients de diffusion à travers le sol pour C, N et P (Tableau 3)*

Les concentrations de C, N et P en proximité des RCS enfouis dépendent des coefficients de diffusion pour ces substrats migrant à différente distances donc plus ou moins disponibles aux azotobactéries. De (ou $D^*_a$ selon Habib et Guennelon 1983) est calculé ;

$$De = Do / (1 + ((\Xi_d{}^{\wedge}bd) / :))$$

sachant que Do est le coefficient moléculaire du substrat dans l'eau, et b est un coefficient linéaire décrivant le taux d'adsorption du substrat *in situ* ; $\Xi_d$ et : :sont les densités apparentes et la teneur volumétrique en eau (v/v) du sol. À ce stade $\Xi_d$ et : :sont de 1,25 (g/cm³) et 0,25 (v/v), respectivement, et les substrats C, N et P, respectivement, la cellobiose, l'ammonium et les phosphates, soit les métabolites communément issus de la dégradation microbiologique in situ des RCS (cf. Tableau 3, valeurs Do et De / Habib et Guennelon 1983). Les coefficients de diffusion moléculaires (Do) sont les mêmes pour les différents substrats, tandis que les coefficients de diffusion effective (De) sont différents du fait des valeurs bd variables. Les valeurs de bd applicables à l'équation 7 de Habib et Guennelon 1983 ont été estimées, respectivement, pour les métabolites C, N et P à partir de données publiées dans Neff et al. 2001 (tableau 2 et annexe, op. cit.), NGWCLC 2003 (tableau 3.2, op. cit.) et Habib et Guennelon 1983 (eq. 15, page 117, op. cit.).

*Calcul des concentrations initiales de C, N et P (Tableau 2-a)*

Les concentrations initiales des sols en C, N et P provenant de l'enfouissement des RCS sont exprimés en kg par m³ selon Poll et al. 2006. Pour obtenir cette concentration initiale du carbone, Cco, il suffit de diviser les kg de RCS, RCS, par 0,42 - la teneur approximative en C des RCS ; la teneur initiale en azote des RCS, Cno, est elle égale à Cco / rCNo. *Idem* pour ce qui est de la teneur initiale des RCS en P égale à Cco / rCPo. Il est important de distinguer entre Cpo et Cpoi, cette dernière valeur étant celle pour les RCS avant l'apport de dPo proportionnel à Cpo. iPAZ-P comportera donc aussi les calculs suivants ;

$$Cco <- RCS/1000 * 0.42 \quad \text{kg-C / m3 de sol sur 10 cm de profondeur}$$
$$Cno <- Cco / rCNo \quad \text{kg-N / m3 de sol sur 10 cm de profondeur}$$
$$Cpoi <- Cco / rCPo \quad \text{kg-P / m3 de sol sur 10 cm de profondeur}$$
$$dP <- dPo * Cpoi \quad \text{Besoins en P pour atteindre pAZB ~ 0,00}$$
$$Cpo <- Cpoi + dP$$

L'apport dP permettra d'augmenter pAZB de manière à atteindre un seuil où le P n'est plus limitatif. Il s'en suite que les préconisations d'engrais P seront donc fortement proportionnelles à dP.

Tableau 2-a : Modèle iPAZ-R - Code R pour la modélisation du potentiel AZB (pAZB) ; Intégration des scénarii (Tableau 1) et paramétrage des équations de diffusion et de consommation (dégradation) des substrats C, N et P selon leurs distance de migration à l'équilibre.

```
rm(list=ls())
data <- scan(file = "data iPAZ.txt", skip = 1, n = -1, dec = ",")
data <- matrix(data, ncol = 10, byrow = TRUE)

teta <- 0.25                          # Habib et Guennelon 1983 éq. 12 (v/v)
da <- 1.25                            # Habib et Guennelon 1983 éq. 12 (g/cm3)

Doc <- (1.5e-6)                       # m2/jour (Wang et al. 2011, tableau 1)
bdc <- 2.0                            # Neff et Asner 2001, tableau 2, annexe
Don <- (1.5e-6)                       # m2/jour (Ccokeborne et al. 1988, tableau 5)
bdn <- 5.0                            # NGW CLC 2003, tableau 3.2
Dop <- (1.5e-6)                       # m2/jour (Habib et Guennelon 1983, page 118)
bdp <- 10.0                           # Habib et Guennelon 1983 éq. 7, Figure 2
A <- 3.33                             # Poll et al. 2006 (tableau 2, figure 2) : kD
B <- 5.00                             # Poll et al. 2006 (tableau 2, figure 2) : kD
C <- 10.0                             # Poll et al. 2006 (tableau 2, figure 2) : kD
a <- 3.65                             # Poll et al. 2006 (tableau 2, figure 2) : vD
b <- 3.65                             # Poll et al. 2006 (tableau 2, figure 2) : vD
c <- 3.65                             # Poll et al. 2006 (tableau 2, figure 2) : vD

    for (n in 1:length(data[,1])) {

RCS <- data[n,1]                      # kg de RCS
cRCS <- data[n,2]                     # % de couverture du sol par les RCS
dmm <- data[n,3]                      # distance entre les foyers d'activités (cm)
zm <- dmm/1000/2                      # i.e. mi-distance entre deux foyers d'activité
("hotspots") - m
i <- iEE-4 <- data[n,4]               # "intensité des foyers d'activité selon kde2d" - EE-
04
iRCS <- data[n,5]
rCNo <- data[n,6]
RDT <- data[n,7]
Nrcs <- data[n,8]/100
Nm <- data[n,9]
dPo <- data[n,10]

rCPo <- 10.15*rCNo^1.16               # Manzoni et al. 2010 (Figure 2)
rNPo <- rCPo/rCNo
rCNc <- 2.3475*rCNo^0.7452            # Manzoni et al. 2010 (figure 7c)
rCPc <- 2.3223*rCPo^0.8430            # Manzoni et al. 2010 (figure 7d)
rNPc <- rCPc/rCNc

Cco <- RCS/1000 * 0.42               # kg-C / m3 de sol sur 10 cm de profondeur
Cno <- Cco / rCNo                    # kg-N / m3 de sol sur 10 cm de profondeur
        Cpoi <- Cco / rCPo          # kg-P / m3 de sol sur 10 cm de profondeur
        dP <- dPo * Cpoi            # ... besoins en P pour atteindre pAZB ~ 0,00
Cpo <- Cpoi + dP
-----------------------------------------------------------------------------------------------
```

*Calcul des concentrations finales de C, N et P (Tableau 2-b)*

Les équations différentielles de Poll et al. 2006 (éqs. 4 et 5) permettent de s'affranchir de la variable temps. En effet le ratios rCN et rCP (C/N et C/P) calculés pour les résidusphères sont elles fonction des susdites concentrations initiales des substrats C, N et P, Cc, Cn et Cp, une fois atteinte une certaine distance de migration, zc, zn et zc (mm), à partir de l'interface sol : RCS ;

$$C(z) = C_o \exp(rz),$$

sachant que r est défini, pour chaque type de substrats, rc, rn et rp (Tableau 2-b), comme suit ;

$$r = \frac{v}{2D} - \sqrt{\left(\frac{v}{2D}\right)^2 + \frac{k}{D}},$$

et que D est le coefficient de diffusion effective (De), et que k et v sont des coefficients empiriques définis par Poll et al. 2006 (eq. 5). Dans le cas présent, k et v sont spécifiés pour chacun des substrats - métabolites C, N et P (i.e. $k_{cnp}$ et $v_{cnp}$, selon le cas) comme suit ;

$k_{cnp}$ <- (A, B ou C) ⊖$De_{cnp}$     # k/jour (Poll et al. 2008, tableau 2)

$v_{cnp}$ <-  (a, b ou c) ⊖$De_{cnp}$     # mm/j ; Convection (Poll et al. 2008, tableau 2)

sachant que les valeurs A, B, et C, ou a, b et c applicable au substrats C, N et P, respectivement ayant déjà été rapportées ci-dessus au Tableau 3. Il est possible, toujours selon Poll et al. 2006, de relier le taux d'utilisation microbienne de ces substrats à leurs taux de diffusion ; plus le taux de diffusion est grand, et inversement plus le taux de consommation est faible, plus chacun des substrats pourra migrer loin de l'interface sol : RCS, soit ici ~4 mm pour le cellobiose (C), ~2 mm pour $NH_4$ (N), et ~1 mm pour les $PO_4$ (P).

**Tableau 2-b :** Modèle iPAZ-R - Code R pour la modélisation du potentiel AZB (pAZB) ; <u>Calculs des concentrations des substrats C, N et P, essentiellement de la cellobiose, de l'ammonium et des phosphates, une fois leurs distances de migrations maximale, z (mm), respectives atteintes.</u>

| | |
|---|---|
| **# Concentration des substrats C-solubles** ... | |
| Dec <- Doc / (1+((da^bdc)/teta)) | # Habib et Guennelon 1983 éq. 12 |
| kc <- A * Dec | # k/jour (Poll et al. 2008, tableau 2) |
| vc <-  a * Dec | # mm/j ; Cnovection (Poll et al. 2008, tableau 2) |
| rc <- vc / (2*Dec) - ((vc / (2*Dec))^2 + kc/Dec)^0.5 | # Poll et al. 2006 eq. 5 |
| zc <- -2.996/rc | |
| Cc <- (Cco*i)*exp(rc*(zm)) | # kg/m3 ; Poll et al. 2006 eq. 4 |
| **# Concentration des substrats N-Nm** ... | |
| Den <- Don / (1+((da^bdn)/teta)) | # Habib et Guennelon 1983 éq. 12 |
| kn <- B * Den | # k/jour (Poll et al. 2008, tableau 2) |
| vn <-  b * Den | # mm/j ; Cnovection (Poll et al. 2008, tableau 2) |
| rn <- vn / (2*Den) - ((vn / (2*Den))^2 + kn/Den)^0.5 | # Poll et al. 2006 eq. 5 |
| zn <- -2.996/rn | |
| Cn <- (Cno*i)*exp(rn*(zm)) | # kg/m3 ; Poll et al. 2006 eq. 4 |
| → **Module diazotrophe** ; Tableau 2-c<br>**# Concentration des substrats P-PO4** ... | |
| Dep <- Dop / (1+((da^bdp)/teta)) | # Habib et Guennelon 1983 éq. 12 |
| kp <- C * Dep | # k/jour (Poll et al. 2008, tableau 2) |

(suite)

---

→ **Module diazotrophe** ; Tableau 2-c

**# Concentration des substrats P-PO4** ...

$$vp <- c * Dep$$  # mm/j ; Cnovection (Poll et al. 2008, tableau 2)

$$rp <- vp / (2*Dep) - ((vp / (2*Dep))^2 + kp/Dep)^{0.5}$$  # Poll et al. 2006 eq. 5

$$zp <- -2.996/rp$$

$$Cp <- (Cpo*i)*exp(rp*(zm))$$  # kg/m3 ; Poll et al. 2006 eq. 4

---

**Tableau 3** : Paramétrae du modèle iPAZ-R (cf. Tableaux 2-a, b et c)

|  | **C** | **N** | **P** | **unités / référence / cf.** |
|---|---|---|---|---|
| Métabolite | cellobiose | ammonium | phosphates | |
| Do | 1,5 | 1,5 | 1,5 | m2 / jours x 10e6 |
| De | 0,207 | 0,114 | 0,039 | m2 /jours x 10e6 |
| bd | 2 | 5 | 10 | Habib et Guennelon 1983, eq. 7 |
| De/Do | 0,138 | 0,076 | 0,026 | na |
| coeff. ABC | 3,33 (A) | 5,00 (B) | 10,0 (C) | Au sens de Poll et al. 2006 |
| coeff. abc | 3,65 (a) | 3,65 (b) | 3,65 (c) | Au sens de Poll et al. 2006 |
| Références | Neff et al. 2001 | NGWCLC 2003 | Habib et Guennelon 1983 | |

*Calcul du la contribution de la diazotrophie non symbiotique (Tableau 2-c)*

Un module de la diffusion de l'Nm entre les RCS et RAC (i.e. résidus de racines) prend en compte le rendement de la culture précédente (RDT), la quantité de RCS et leur teneur en N. RDT, avantageusement d'une céréale ou d'un maïs - grain, peut servir d'indicateur suffisamment précis du ratio entre les quantités post-récolte de résidus cellulosiques laissés au sol et racinaire, ratio dénommé ici rMS. De plus, le rapport entre RDT et la teneur en N des RCS (RVN) est bien corrélé au ratio entre les teneurs en N des résidus aériens et souterrain (rNS) ;

$$rMS = RCS / RAC$$

$$rNS = \%Nrcs / \%Nrac$$

$$RVN = RDT / Nrcs$$

Notons qu'on peut aussi poser RVN = RCS / Nrcs. D'une manière ou l'autre, RVN a pour unités une masse par unité de surface. Or, ce "rendement" aérien fonction des rendements agronomiques et, étonnamment, des richesses en N des résidus cellulosique s'avère être dégressif par rapport à rNS, la richesse relative des RCS par rapport à celles des RAC. Or, plus ce rendement protéique, inversé en en sort par rapport à RDN, est important, plus l'azote résiduelle, i.e. non comprise dans RDN, des RAC sera important par rapport à celles des RCS. Il s'agit donc relation dégressive analogue à celle de l'azote critique (Nc ; %) par rapport à la biomasse totale aérienne (DM ; t/ha) décrite par Justes et al. 1994.

Je propose d'établir des relations pour le calcul de rMS, rNS, ainsi que la quantité de résidus cellulosique produite en proportion des celle des racines au moment de la récolte de RDT. Plus précisément, et ce stade sur la base de données d'Allard et al. 2013 ;

$$rMS \quad = 0.0601*RDT^{0.7056}$$   | ratio sans unités

$$rNS \quad = 1.7481*RVN\text{^}-0.2449 \qquad | \text{ ratio sans unités}$$

$$MSrcs \quad = 1.911*RDT+164.15 \qquad | \text{ g / m2}$$

$$iV \quad = 0.0131*RDT+2.3159 \qquad | \text{ ratio sans unités}$$

Pour fin de validation, il faut estimer les quantités d'azote (minéral ; mg/kg) immobilisé (Nimmb), minéralisé (Nminr) et d'origine diazotrophe (Ndiazo) suite à l'enfouissement des RCS. Plus précisément et tel qu'incorporé au code R (Tableau 2-c) nous calculons ces quantités en fonction du temps (jours), voire du temps *phénologique* (tbbch) ;

**Tableau 2-c** : Modèle iPAZ-R - Code R pour la modélisation du potentiel AZB (pAZB) ; Module diazotrophe partie intégrante partie intégrante des calculs des concentrations des substrats C, N et P à z (mm).

```
#CALCUL DE RMS, RNS, ET RCNRDS ET RCNRZS ; LES RDT PERMETTENT EUX D'ÉTABLIR MSRAC ET MSRCS
rCNrcs <- 0.42/Nrcs
RVN <- RDT/Nrcs/100/100
rMS <- 0.0601*RDT^0.7056
rNS <- 1.7481*RVN^-0.2449
MSrcs <- 1.911*RDT+164.15
iV <- 0.0131*RDT+2.3159
MSrac <- MSrcs/rMS
Nrac <- Nrcs/rNS
rCNrac <- 0.42/Nrac
iVAZ <- (rMS-rNS)
interculture <- 090
bdiazo <- 21.569*exp(-0.4338*rNPo)                    # module DIAZO selon Smith 1992 et Howarth et Marino 1988
N1 <- Nm
N2 <- Nm
x <- 4/100                                            # dimension de la résidusphère (Gaillards et al. 1999)
D <- Don / (1+((da^bdn)/teta))                        # Habib et Guennelon 1983 éq. 12

        for (tbbch in 1:interculture) {

#CALCUL DE LA DYNAMIQUE INTERNE DE L'AZOTE MINÉRAL AU SEIN DE RDS.
Bimmb <- function(rCNrcs) return(-0.3096*rCNrcs^-0.2667)
Bminr <- function(rCNrcs) return(+0.3096*rCNrcs^-0.2667)
IMMB <- function(tbbch, bimmb, N1) return(N1/(1+exp(-bimmb*tbbch)))
MINR <- function(tbbch, bminr, Nrcs, MSrcs, Ndiazo) return(((Nrcs*MSrcs)+Ndiazo)/(1+exp(-bminr*tbbch))/(8.51*tbbch^-0.53))
DIAZO <- function(tbbch, bdiazo, N1) return((14/(1+exp(-bdiazo*tbbch)))*(36*N1^-0.2493/100))
        bimmb <- Bimmb(rCNrcs)
        Nimmb <- IMMB(tbbch, bimmb, N1)
        bminr <- Bminr(rCNrcs)
        Ndiazo <- 0
        Nminr <- MINR(tbbch, bminr, Nrcs, MSrcs, Ndiazo)
        N1 <- Nimmb + Nminr
        Ndiazo <- DIAZO(tbbch, bdiazo, N1)
        N1 <- 0
        Nminr <- MINR(tbbch, bminr, Nrcs, MSrcs, Ndiazo)
        N1 <- Nimmb + Nminr
        AZBrds <- Ndiazo
        x1 <- matrix(c(tbbch, Nimmb, Ndiazo, Nminr, N1), ncol=5)
        y1 <- data.frame(x1)

#CALCUL DE LA DYNAMIQUE INTERNE DE L'AZOTE MINÉRAL AU SEIN DE RZS.
Bimmb <- function(rCNrac) return(-0.3096*rCNrac^-0.2667)
Bminr <- function(rCNrac) return(+0.3096*rCNrac^-0.2667)
IMMB <- function(tbbch, bimmb, N2) return(N2/(1+exp(-bimmb*tbbch)))
MINR <- function(tbbch, bminr, Nrac, MSrac, Ndiazo) return(((Nrac*MSrac)+Ndiazo)/(1+exp(-bminr*tbbch))/(8.51*tbbch^-0.53))
DIAZO <- function(tbbch, bdiazo, N2) return((14/(1+exp(-bdiazo*tbbch)))*(36*N2^-0.2493/100))
        bimmb <- Bimmb(rCNrac)
        Nimmb <- IMMB(tbbch, bimmb, N2)
        bminr <- Bminr(rCNrac)
        Ndiazo <- 0
        Nminr <- MINR(tbbch, bminr, Nrac, MSrac, Ndiazo)
        N2 <- Nimmb + Nminr
        Ndiazo <- DIAZO(tbbch, bdiazo, N2)
        N2 <- 0
        Nminr <- MINR(tbbch, bminr, Nrac, MSrac, Ndiazo)
        N2 <- Nimmb + Nminr
        AZBrzs <- Ndiazo
        x1 <- matrix(c(tbbch, Nimmb, Ndiazo, Nminr, N2), ncol=5)
        y1 <- data.frame(x1)

#CALCUL DE LA DYNAMIQUE DN1/DT TELLE QU'AFFECTÉE PAR LA DIFFUSION N12 ET N21.
DIFF12 <- function(tbbch, N2, x, D) return((N2/2)*(1-erf(x/(2*(D*tbbch)^0.5))))
DIFF21 <- function(tbbch, N1, x, D) return((N1/2)*(1-erf(x/(2*(D*tbbch)^0.5))))
        n12 <- DIFF12(tbbch, N2, x, D)
        n21 <- DIFF21(tbbch, N1, x, D)
        Nrds <- N1 - n12 + n21
        Nrzs <- N2 + n12 - n21
        Nsol <- Nrds+Nrzs
        pAZB1 <- Nrzs/Nrds
        pAZB2 <- AZBrds/AZBrzs
        x1 <- matrix(c(tbbch, n12, n21, Nrds, Nrzs, Nsol, pAZB1, pAZB2), ncol=8)
        y1 <- data.frame(x1) }

Cn <- (Cno*i)*exp(rn*(zm)) + Nsol/1000                # kg/m3 ; Poll et al. 2006 eq. 4
```

$$Nimmb = N1/(1+\exp(-bimmb*tbbch)) \qquad | \text{ mgN/kg}$$

$$Nminr = (Nrcs*MSrcs)+Ndiazo)/(1+\exp(-bminr*tbbch))/(8.51*tbbch^{\wedge}-0.53) \qquad | \text{ mgN/kg}$$

$$Ndiazo = 14/(1+\exp(-bdiazo*tbbch)))*(36*N1^{\wedge}-0.2493/100) \qquad | \text{ mgN/kg}$$

Notons que la quantité Ndiazo et intégrée a priori dans l'azote à minéraliser (minéralisable). En effet, la diazotrophie produit avant tout de la biomasse cytosolique ammonifiable ; il est judicieux d'ajouter cette quantité à l'ensemble de l'azote minéralisable provenant des résidus de culture et/ou des biomasses racinaires résiduelles. Les valeurs des coefficients bimmb, bminr et bdizao étant eux directement fonction des rCNrcs, i.e. les ratios C/N des RCS, à savoir ;

$$Bimmb = function(rCNrcs)\ return(-0.3096*rCNrcs^{\wedge}-0.2667) \qquad | \text{ coefficient}$$

$$Bminr = function(rCNrcs)\ return(+0.3096*rCNrcs^{\wedge}-0.2667) \qquad | \text{ coefficient}$$

Afin de tenir compte de la rétroaction négative de la diazotrophie (alias ; activité de réduction de l'acétylène - ARA) lorsque les rNP sont élevés, le coefficient bdiazo est calculé ;

$$bdiazo <- 21.569*\exp(-0.4338*rNPrcs)$$

Cette fonction basée sur des données de Smith 1992 et Howarth et Marino 1988 permet de plafonner Ndiazo (Figure 2) au delà d'une quinzaine de mg-N par kg-sol et/ou l'équivalent d'un mM en solution de sol (Figure 4). Cette dynamique de la diazotrophie comporte donc trois moments ;

le calcul de bdiazo selon rNPo sur la base des données de Howarth et Marion 1988 ;

>

$$bdiazo = 21{,}569 \times \exp(-0.4338 \times rNPo)\ |\ \text{Figure 2, abîme A}$$

le calcul de DIAZO selon rNPo sur la base de bdiazo ;

>

$$DIAZO = 14 / (1 + \exp(-bdiazo \times tbbch)\ |\ \text{Figure 2, abîme B}$$

le calcul de Ndiazo selon rNPo sur la base de DIAZO ;

>

$$Ndiazo = DIAZO \times 36 \times Nm^{(-0.2493/100)}\ |\ \text{Figure 2, courbe principale}$$

Il en résulte une courbe dégressive d'Ndiazo selon rNPo (Figure 2) fortement atténuée dès rNPo = 20‡ 22, ce qui est raisonnable et en accord avec une accumulation d'azote d'origine diazotrophe lorsque les substrats sont trop riche en N par rapport à la biodisponibilité du P. Ce module diazotrophe est partie intégrante du modèle iPAZ-R (Tableau 2-c).

Pour l'estimation des quantités d'Nm immobilisé (Nimmb), minéralisé (Nminr) et d'origine diazotrophe (Ndiazo) au sein de la rhizosphère (RZS), les calculs sont mêmes à l'exception des rCNrcs remplacé par rCNrzs, i.e. les ratios C/N des biomasses souterraines provenant des biomasses racinaires résiduelles, ainsi que les Nrcs et MSrcs remplacées par Nrac et MSrzs (cf. Tableau 2-c). Nous définissons par la suite les deux compartiments du sol, N1 et N2, contenant les quantités d'Nm provenant des susdits processus d'immobilisation, minéralisation et diazotrophie. Nous établissons donc que ;

$$N1 = Nimmb + Nminr \mid RDS, \text{ en mgN/kg (de sol) - Tableau 2-c}$$

$$N2 = Nimmb + Nminr \mid .RZS, \text{ en mgN/kg (de sol) - Tableau 2-c}$$

Enfin, il faut tenir compte de la diffusion de l'Nm des RAC plutôt riches en N et donc en N minéralisé vers les RCS qui sont elles ici en principe plus pauvres en N. Plus précisément, et encore une fois tel qu'incorporé dans le code R (Tableau 1) ;

$$n12 \quad = (N2/2)*(1\text{-}erf(x/(2*(D*tbbch)^{0.5}))) \quad \mid mgN/kg$$

$$n21 \quad = (N1/2)*(1\text{-}erf(x/(2*(D*tbbch)^{0.5}))) \quad \mid mgN/kg$$

Ces quantités d'Nm diffusables de N1 (RDS) ver N2 (RZS) sont fonction du coefficient de diffusion de l'ammonium, et non du nitrate (beaucoup plus important) puisque que c'est l'ammonium qui apparaît en premier lors de la minéralisation pendant l'inter-culture hivernale. Voir le Tableau 2-c pour le code R permettant de modéliser ces processus ; le cas échéant, les valeurs proposées pour les différents coefficients sont indiquées.

*Calcul du potentiel azotobactériens in situ (pAZB) (Tableau 2-d)*

Le pAZB maxium sera atteint que si l'Nm est suffisamment immobilisé, et si le phosphore du sol ne l'est pas. Non seulement pAZB est sujet à rétroaction négative par Nm, mais il est aussi énergivore requérant donc d'abondantes réserves de ATP et donc de P biodisponible.
Rappelons que l'immobilisation de l'Nm est un plus, et celle du P un moins, d'où ;

$$pAZB = pAZBn \text{ - } pAZBp$$

Pour faire simple, disons que l'pAZB potentielle maximum sera atteint lorsque les taux de formation des métabolites carbonés et azotés seront équilibrés. Par équilibre on veut dire ici que le rapport entre les rCN et P résidusphériques et les rCN et P critiques est approximativement unitaire.

**Tableau 2-d** : Modèle iPAZ-R - Code R pour la modélisation du potentiel AZB (pAZB) ; <u>Calcul de l'efficacité relative de l'azotobactérisation, ou de l'activité de la flore azotobactérienne du sol en cas de non inoculation des RCS, selon les concentration des substrats C, N et P à l'équilibre une fois z (mm) atteints au sens de Poll et al. 2006.</u>

```
 # Calcul de l'pAZB selon rCNc et rCPc  ...
rCN <- Cc/Cn
rCP <- Cc/Cp
rNP <- Cn/Cp

pAZBn <- rCN / rCNc
pAZBp <- rCP / rCPc
pAZB = pAZBn - pAZBp

rZc <- zc/(zm*1000)
rZn <- zn/(zm*1000)
rZp <- zp/(zm*1000)

x1 <- matrix(c(RCS, Cco, Cno, Cpo, rCNo, rCPo, rNPo, Cc, Cn, Cp, pAZBn, pAZBp, pAZB, Cpoi, dP), ncol = 15)
y1 <- data.frame(x1)
write.table(y1, file = "pAZB iPAZ vx", append = TRUE, sep = "\t", col.names = FALSE, dec = ",") }
-------------------------------------------------------------------------------------------------------------
```

*Courbe de réponse MITAZB, coefficient b et calcul de dP (Tableau 6)*

Le code R proposé (Tableau 2-d) crée un fichier contenant l'ensemble des données modélisées (Tableau 4), y compris donc pAZB et dP qui peuvent être mise en relation (Figure 3). Au Tableau 5 sont rapportées les statistiques descriptives pour ces résultats de modélisation. Cette relation est clairement mitschlerichienne et dites ici MITAZB. Donc, à l'aide de la fonction (procédure) nls2 de R (Tableau 6), il est en principe possible d'établir les coefficients A, ***b*** et c d'une relation en touts points analogue à l'équation (1) ci-dessus, à savoir maintenant ;

**Tableau 4** : Résultats de la modélisation iPAZ-R comprenant une préconisation de dP → dP/ha, i.e. en fonction d'une fraction de l'apport de P initialement retournée au sol via les RCS et de la réponse MITAZB (éq. 3), y compris et plus particulièrement le coefficient b (éq. 4) permettant de calibrer cette dP de manière à obtenir une pAZB optimale. Ici, et selon le code R proposé au Tableau 5, le coefficient b est estimé à -0,1990 ; le graphe de cette fonction dP = -b OCpoi est rapporté à la Figure 4.

| RCS, Kg/ha | Cco, kg/m$^3$ | Cno, kg/m$^3$ | Cpo, kg/m$^3$ | PAZB, éq. 3 | Cpoi, éq. 4 | dP, éq. 4 | Cpoi, kgP/ha | dP, kqPha |
|---|---|---|---|---|---|---|---|---|
| 5500 | 2,3100 | 0,0700 | 0,0040 | -0,1858 | 3,94E-03 | 3,94E-05 | 4,93 | 0,98 |
| 5500 | 2,3100 | 0,0700 | 0,0040 | -0,1858 | 3,94E-03 | 3,94E-05 | 4,93 | 0,98 |
| 5500 | 2,3100 | 0,0700 | 0,0040 | -0,1858 | 3,94E-03 | 3,94E-05 | 4,93 | 0,98 |
| 5500 | 2,3100 | 0,0700 | 0,0040 | -0,1858 | 3,94E-03 | 3,94E-05 | 4,93 | 0,98 |
| 5500 | 2,3100 | 0,0700 | 0,0040 | -0,1858 | 3,94E-03 | 3,94E-05 | 4,93 | 0,98 |
| 8250 | 3,4650 | 0,1050 | 0,0060 | -0,2034 | 5,91E-03 | 5,91E-05 | 7,39 | 1,47 |
| 8250 | 3,4650 | 0,1050 | 0,0060 | -0,2034 | 5,91E-03 | 5,91E-05 | 7,39 | 1,47 |
| 8250 | 3,4650 | 0,1050 | 0,0060 | -0,2034 | 5,91E-03 | 5,91E-05 | 7,39 | 1,47 |
| 8250 | 3,4650 | 0,1050 | 0,0060 | -0,2034 | 5,91E-03 | 5,91E-05 | 7,39 | 1,47 |
| 8250 | 3,4650 | 0,1050 | 0,0060 | -0,2034 | 5,91E-03 | 5,91E-05 | 7,39 | 1,47 |
| 4000 | 1,6800 | 0,0509 | 0,0029 | -0,2535 | 2,87E-03 | 2,87E-05 | 3,58 | 0,71 |
| 4000 | 1,6800 | 0,0509 | 0,0029 | -0,2535 | 2,87E-03 | 2,87E-05 | 3,58 | 0,71 |
| 4000 | 1,6800 | 0,0509 | 0,0029 | -0,2535 | 2,87E-03 | 2,87E-05 | 3,58 | 0,71 |
| 4000 | 1,6800 | 0,0509 | 0,0029 | -0,2535 | 2,87E-03 | 2,87E-05 | 3,58 | 0,71 |
| 4000 | 1,6800 | 0,0509 | 0,0029 | -0,2535 | 2,87E-03 | 2,87E-05 | 3,58 | 0,71 |
| 7500 | 3,1500 | 0,0955 | 0,0054 | -0,1879 | 5,37E-03 | 5,37E-05 | 6,72 | 1,34 |
| 7500 | 3,1500 | 0,0955 | 0,0054 | -0,1879 | 5,37E-03 | 5,37E-05 | 6,72 | 1,34 |
| 7500 | 3,1500 | 0,0955 | 0,0054 | -0,1879 | 5,37E-03 | 5,37E-05 | 6,72 | 1,34 |
| 7500 | 3,1500 | 0,0955 | 0,0054 | -0,1879 | 5,37E-03 | 5,37E-05 | 6,72 | 1,34 |
| 7500 | 3,1500 | 0,0955 | 0,0054 | -0,1879 | 5,37E-03 | 5,37E-05 | 6,72 | 1,34 |
| 9000 | 3,7800 | 0,1145 | 0,0065 | -0,1905 | 6,45E-03 | 6,45E-05 | 8,06 | 1,60 |
| 9000 | 3,7800 | 0,1145 | 0,0065 | -0,1905 | 6,45E-03 | 6,45E-05 | 8,06 | 1,60 |
| 9000 | 3,7800 | 0,1145 | 0,0065 | -0,1905 | 6,45E-03 | 6,45E-05 | 8,06 | 1,60 |
| 9000 | 3,7800 | 0,1145 | 0,0065 | -0,1905 | 6,45E-03 | 6,45E-05 | 8,06 | 1,60 |
| 9000 | 3,7800 | 0,1145 | 0,0065 | -0,1905 | 6,45E-03 | 6,45E-05 | 8,06 | 1,60 |
| 6571 | 2,7598 | 0,0836 | 0,0048 | -0,2628 | 4,71E-03 | 4,71E-05 | 5,89 | 1,17 |
| 6571 | 2,7598 | 0,0836 | 0,0048 | -0,2628 | 4,71E-03 | 4,71E-05 | 5,89 | 1,17 |
| 6571 | 2,7598 | 0,0836 | 0,0048 | -0,2628 | 4,71E-03 | 4,71E-05 | 5,89 | 1,17 |
| 6571 | 2,7598 | 0,0836 | 0,0048 | -0,2628 | 4,71E-03 | 4,71E-05 | 5,89 | 1,17 |
| 6571 | 2,7598 | 0,0836 | 0,0048 | -0,2628 | 4,71E-03 | 4,71E-05 | 5,89 | 1,17 |
| 3947 | 1,6577 | 0,0502 | 0,0029 | -0,2710 | 2,83E-03 | 2,83E-05 | 3,54 | 0,70 |
| Etc. | | | | | | | | |
| n = 1 | | | | | | | | |
| 500 ... . | | | | | | | | |

$$pAZB = A \ominus[1 - \exp(-c \ominus(\underline{\textbf{\textit{b}}} \ominus Cpoi + dP))] \qquad (3)$$

Les teneurs en P du sol sont remplacés par les concentrations en P du sol provenant directement des RCS enfouis (Cpoi) et les apports d'engrais P, dP, proportionnels à une fraction dPo de Cpoi, soit ici de 1 à 25%. On combine donc de facto Cpoi et dP. Or, ici la solution numérique de cette équation (algorithme nls2 / code R / Tableau 6) ne donne que le coefficient b = 0,199 (Figure 4).

**Tableau 5** : Données modélisées par iPAZ-R (*alias* output data) - pAZB iPAZ.xls

| Echantillon | Unités | Minimum | Maximum | Médiane | Moyenne | écartype (n-1) | Moyenne géom. |
|---|---|---|---|---|---|---|---|
| RCS, | kg/ha | 3947 | 9000 | 6421 | 6360 | 1791 | 6094 |
| Cco, | kg/m$^3$ | 1,658 | 3,780 | 2,697 | 2,671 | 0,752 | 2,559 |
| Cno, | kg/m$^3$ | 0,013 | 0,115 | 0,035 | 0,044 | 0,026 | 0,037 |
| Cpo, | kg/m$^3$ | 0,001 | 0,008 | 0,002 | 0,003 | 0,002 | 0,002 |
| rCNo, | sans unités | 33,000 | 125,000 | 75,000 | 76,600 | 33,181 | 68,848 |
| rCPo, | sans unités | 586 | 2747 | 1519 | 1584 | 781 | 1375 |
| rNPo, | sans unités | 17,759 | 21,977 | 20,252 | 20,035 | 1,516 | 19,977 |
| Cc, | kg/m$^3$ | 2,686 | 11,252 | 5,890 | 6,696 | 3,043 | 5,977 |
| Cn, | kg/m$^3$ | 0,030 | 0,360 | 0,097 | 0,121 | 0,080 | 0,099 |
| Cp, | kg/m$^3$ | 0,001 | 0,024 | 0,005 | 0,006 | 0,005 | 0,005 |
| pAZBn, | Sans unités | 0,899 | 1,315 | 1,090 | 1,099 | 0,114 | 1,093 |
| pAZBp, | Sans unités | 0,944 | 1,503 | 1,208 | 1,213 | 0,138 | 1,205 |
| pAZB, | Sans unités | -0,454 | 0,106 | -0,117 | -0,115 | 0,111 | |
| Cpoi | kg/m$^3$ | 0,001 | 0,006 | 0,002 | 0,002 | 0,001 | 0,002 |
| dP | sans unités | 0,000 | 0,002 | 0,000 | 0,000 | 0,000 | 0,000 |
| Cpoi/ha | kg/ha | 0,754 | 8,062 | 2,198 | 2,841 | 1,873 | 2,326 |
| dP /ha | kg/ha | 0,150 | 1,604 | 0,437 | 0,565 | 0,373 | 0,463 |

**Tableau 6** : Proposition de code R pour la détermination des coefficients A, b et c

```
rm(list=ls())

data <- scan(file = "pAZB iPAZ.txt", skip = 1, n = -1, dec = ".")
data <- matrix(data, ncol = 15, byrow = TRUE)

data

pAZB <- data[,13]              selon iRCS / iVAZ
Cpoi <- data[,14]              kg/m3
dP <- data[,15]                 kg/m3

nlc <- nls.control(maxiter = 10000, tol = 0.001, minFactor = 1e-12)
data1 <- nls2(pAZB ~ A*(1 - exp(-c*(b*Cpoi+dP))), start = list(A=0.05, b=-.25, c=2500), control = nlc, trace = TRUE)

summary(data1)
```

*Préconisation des dP selon l'apport initiale de P via RCS (Figure 4)*

Pour obtenir les dP nécessaires à la pleine réalisation d'pAZB il faut donc résoudre l'équation (3) lorsque pAZB = 0,00 de manière à ce que dP ne soit plus *que* fonction du coefficient **_b_**, à savoir ;

$$dP = -\boldsymbol{b} \ominus Cpoi \quad (4 ; \text{mg-P / kg-sol, ou kg-P / ha}) \qquad (4)$$

Ce résultat surprenant provient du fait que le logarithme naturel (LN) de [0,00/A] que l'on rencontre lors du réarrangement le l'équation (3) est égale à 1, et que le terme [0/-c] est lui défini comme étant égale à 0,00. In fine, y = -bx, ou ici dP = -bCpoi. Il est possible de rétro - calculer dP en fonction de Cpoi (Figure 4), ce qui s'avère être très pratique d'un point de vue agronomique.

# APPLICATIONS BIOINDUSTRIELLES ET AGRONOMIQUES

## *Calcul et utilisation des microdoses de P, dP (uPi)*

Déterminer la quantité de RCS, directement via la méthode LPTM (Shelton et Jasa 2009), ou indirectement via le RDT de la culture précédente (Steiner et al. 1994a, 1994b, 1995, 2000 et Steiner 1994), et %P des RCS permet de calculer Cpoi et dP selon l'éq. (4) et/ou la Figure 4. Notons qu'à la Figure 4, dP est rapporté en unités de P, et non de $P_2O_5$, et que les dP préconisés sont inférieurs, mais aussi proportionnels à Cpoi. Or, selon l'état de l'art les Cpoi à titre de retour de P au sol contribuent généralement à réduire, et non à augmenter, dP.

## *Application des uPi (dP)*

Il existe dans le commerce de nombreuses préparation d'engrais P soluble dans l'eau pulvérisables, le plus souvent destinées à l'application foliaire ; leur application directement RCS est elle aussi ici assez inhabituelle - au Tableau 7 une liste de quelques une de ces produits ;

**Tableau 7** : Quelques exemples d'engais phosphoriques commercialisés pouvant être utilisés dans la réalisation de la présente invention.

| Produit | Fabricant | g-P2O5 / L | g-P / L | Formulation | Utilisation habituelle |
|---|---|---|---|---|---|
| Capfol ù | Agronutrition, France | 60 | 26,2 | liquide | foliaire |
| Florilegeù Ultra | Agronutrition, France | 250 | 109 | liquide | foliaire |
| Solustarù Mg | Agronutrition, France | 440 | 192 | liquide | sol (démarrage) |
| Solustarù PZ | Agronutrition, France | 440 | 192 | liquide | sol (démarrage) |
| Starmaxù Mg | Agronutrition, France | 440 | 192 | liquide | foliaire |
| YaraVitaù Magphos K | Yara, France | 440 | 192 | liquide | foliaire |
| YaraVitaù Pentaflo | Yara, France | 240 | 105 | liquide | foliaire |
| YaraVitaù Seniphos | Yara, France | 310 | 135 | liquide | foliaire (fruits) |
| YaraVitaù Solatrel | Yara, France | 440 | 192 | liquide | foliaire |
| YaraVitaù Zeatrel | Yara, France | 440 | 192 | liquide | foliaire |
| Granoligoù PB 29 | Agronutrition, France | (14% p/p) | 6,12% | granulés | sol |
| Granoligoù PZ 50 | Agronutrition, France | (16% p/p) | 6,99% | granulés | sol |
| Microstarù Céréales | Agronutrition, France | (47% p/p) | 20,5% | granulés | sol |

Bien que pas été expressément conçues pour application sur RCS, ces préparations démontrent néanmoins qu'il est possible d'apporter aux RCS de telles solutions de P, quitte à en retirer les oligoéléments (sauf le Mo s'il y a), les adjuvants foliaires, etc., pour en réduire le coût. Il y aussi quelques exemples de formulations granulées (solides), suffisamment fines et/ou pulvérulentes pour être répandues (saupoudrées) sur les RCS ; cette technique nécessitera quelques mises au point afin d'éviter les problèmes sanitaires associés à l'utilisation pleins champs de telles poudre.

Les bouillies sont appliquées avec ou après l'azotobactérisation des RCS. Ce type de valorisation bactériologique des RCS est maintenant en plein développement (eg. Claude et Fillon 2004, EP2845906, EP2730926, EP2728353, EP2345319, etc.). Si l'on devait combiner en une seule bouillie, inoculum azotobactérien et P soluble, la pression osmotique agissant sur les bactéries réintroduites aux RCS pourra être avantageusement gérée selon la technique proposée dans EP2647695 à savoir un mode de préparation de bouillies inoculantes pulvérisables comprenant des populations bactériennes moyennement halophiles.

***Validation in situ en terme d'activité azotobactérienne (iVAZ) et rendement agronomique***

Pour valider que le niveau d'uPi (dP) pAZB j'ai utilisé un autre indice, dit ici iVAZ, déjà décrit dans FR1501587. iVAZ est calculé à l'aide de données agronomiques y compris la quantité et la richesse en P des RCS, et prend en compte le fait que les RDT les plus importants produisent proportionnellement de moins en moins de racines résiduelles (RAC) de plus en plus riches en N, et cela au au dépends des teneurs en N des RCS. Cela affecte la minéralisation des RCS et RAC in situ. Concrètement, le calcul d'iVAZ comporte les ratios suivants ;

$$rMS = RCS / RAC \qquad | \text{ ratio sans unités}$$

$$rNS = \%Nrcs / \%Nrac \qquad | \text{ ratio sans unités}$$

$$RVN = RDT / Nrcs \qquad | \text{ unité de poids RCS / unité de surface sol}$$

Notons que le rapport RDT / Nrcs, et non celui des grains (Ngrains) - ratio dénommé ici RVN, est assez bien corrélé au ratio entre les teneurs en N des résidus aériens et souterrains (rNS). Notons aussi une similarité avec les relations RCS :: RDT rapportées par Steiner et al. (1994, 1995 et 2000). On peut donc aussi définir RVN = RCS / Nrcs.
rMS progresse selon le niveau de RDT, et plus RVN sera important, plus l'azote résiduel des RAC sera important par rapport à celles des RCS. Ces dynamiques sont décrites par des fonctions empiriques dont les coefficients a et b de l'équation de type $y = aX^{-b}$ sont de l'ordre de *a* ~ 2 et *b* ~ 0,25 lorsque X est égale à RDT pour rMS, et RVN pour rNS. On calcul iVAZ entant que iVAZ = [ rMS - rNS ] (sans unités). pAZB est lui calculé en deux temps ; (i) entant que ratio entre les teneurs en N des RAC et RCS (pAZB1 *potentielle*), la relative pauvreté en N des RCS étant favorable à la diazotrophie non symbiotique in situ en proximité des RCS, et (ii) entant que ratio entre l'activité Nif (diazotrophe) en elle même au sein des RCS et RAC (pAZB2 *réalisée*) ;

$$pAZB1 = Nrac/Nrcs \qquad | \text{ ratio sans unités}$$

$$pAZB2 = AZBrcs/AZBrac \qquad | \text{ ratio sans unités}$$

L'obtention d'un iVAZ optimum, critique en sorte (iVAZc) pour reprendre la logique de Justes et al. 1994, est possible puisque qu'il existe localement une intersection pAZB1 = pAZB2. Le niveau d'activité azotobactérienne du sol peut donc être indiqué par iVAZ - iVAZc = d[iVAZ]c. Le calcul d'iVAZ et iVAZc est décrit avec plus de précision dans FR1501587.
Des données agronomiques provenant de vingt deux (22) traitements répartis en dix sections (0 à 9) selon le type d'assolement. Ces données brutes provenant de la station expérimentale de Rothamsted (R-U ; Dyke et al. 1983 et Hart et al. 1993, http://www.era.rothamsted.ac.uk/) décrivent les précédents culturaux - y compris avec RCS en pré - semis de blés d'hiver, les quantités de RCS et leurs teneurs élémentaires, et permettent ainsi le calcul de rMS et rNS, et donc iVAZ - iVAZc = d[iVAZ]c. D'autre part, j'ai transformé (Tableau 8) les différences en $P_{Olsen}$ (mg/kg) des sols (données transmises par M. P. Poulton de la station expérimentale Rothamsted, R-U) aux traitements 5 et 3, et 11 et 10, les premiers (5 et 11) étant plus riches en P (P[+]) suit à des apports d'engrais P. Ces différences, de l'ordre -75 mg/kg (données de Paul Poulton, Rothamsted) varies selon les années et les sections, et servent à construire les courbes aux Figures 5 à 7. Pour ce faire j'ai tenu compte des tonnes (t) RCS / ha et les densités apparentes du sol par rapport à celle des RCS, soit -1,25 / 0.25 $g/cm^3$. Les t-RCS/1000 tonnes de sol (ha) sont multipliée par 5
(1,25/0,25) afin d'estimer de l'étendue de la résidusphère (1 à 3% v/v de sol). Appliquée aux différences en $P_{Olsen}$ entre les traitements 5 et 3, et 11 et 10, nous trouvons que pour les traitements 5 et 11 (P[+]), entre 250 et 1500 g-Pi / ha de plus sont en contacte avec les RCS (i.e. Pi *résidusphérique* ; Tableau 8) par rapport aux traitements 3 et 10 (P[-]), respectivement. Conceptuellement, ces différences de Pi sont analogues aux dP (uPi ; g/ha) appliquées aux RCS au sens de la présente invention, d'autant plus que les traitements 5 et 3, et 11 et 10, ne diffèrent qu'en termes de P, les teneurs en matières organiques, C et N, etc., sont pour le reste similaires. uPi est manifestement une variable simple, et peut être mis en relation avec iVAZ et d[iVAZ]c (Figure 5). Les enjeux agronomiques liés à d[iVAZ]c dont présentés dans FR1501587.

**Tableau** 8 : A titre d'exemple, les données pour le BTH sur RCS pailleux au traitement 5 / section 1. Les données brutes proviennent de la station expérimentale Rothamsted (Royaume Uni ; Dyke et al. 1983 et Hart et al. 1993, http://www.era.rothamsted.ac.uk/). Les RCS (t/ha) et les rendements agronomiques (RDT ; t/ha), protéiques (RDN ; UN) et phosphoriques (RDP ; UP) sont ainsi mis en relation avec (uPi ; g/ha - Figures 5, 6 et 7)..uPi (alias dP) est la différence entre les des valeurs de Pi (*résidusphérique ; mg/kg*) avec et sans fertilisation P (+/- P) calculées à partir des valeurs de $P_{Olsen}$ tenant compte du rapport entre les densités apparentes du sol et des RCS (-1.25 / ~0.25 = ~5) et de la quantité de RCS / hectare.

| année | RCS P$^-$ | $P_{Olsen}$ P$^-$ | Pi P$^-$ | RCS P$^+$ | $P_{Olsen}$ P$^+$ | Pi P$^+$ | uPi | i VAZ P$^+$ | d[iVAZ]c P$^+$ | RDT P$^+$ | RDN P$^+$ | RDP P$^+$ |
|---|---|---|---|---|---|---|---|---|---|---|---|---|
| 1968 | 0,64 | **6** | 0,019 | 0,85 | **63** | 0,268 | 249 | 0,021 | -2,50 | 1,07 | 20,12 | 4,60 |
| 1969 | 1,78 | 6 | 0,053 | 1,86 | 63 | 0,586 | 533 | 1,778 | -0,73 | 1,97 | 30,73 | 8,94 |
| 1970 | 0,98 | 6 | 0,029 | 1,15 | 63 | 0,362 | 333 | 1,655 | -0,90 | 1,96 | 34,50 | 6,66 |
| 1971 | 2,13 | 6 | 0,064 | 2,09 | 63 | 0,658 | 594 | 1,838 | -0,31 | 2,00 | 37,00 | 6,52 |
| 1972 | 1,83 | 6 | 0,055 | 1,91 | 63 | 0,602 | 547 | 1,376 | -0,94 | 1,68 | 26,54 | 6,48 |
| 1973 | 1,20 | 6 | 0,036 | 1,47 | 63 | 0,463 | 427 | 1,503 | -0,67 | 1,81 | 30,77 | 6,77 |
| 1974 | 1,44 | 6 | 0,043 | 1,31 | 63 | 0,413 | 369 | 1,368 | -0,54 | 1,70 | 20,15 | |
| 1975 | 0,94 | 6 | 0,028 | 1,21 | 63 | 0,381 | 353 | 0,907 | -0,99 | 1,49 | 84,00 | |
| 1976 | 1,20 | 6 | 0,036 | 1,14 | 63 | 0,359 | 323 | 0,864 | -0,72 | 1,48 | 32,30 | |
| 1977 | 1,23 | 6 | 0,037 | 1,23 | 63 | 0,387 | 351 | 0,636 | -1,49 | 1,24 | 23,84 | |
| 1978 | 1,54 | 6 | 0,046 | 1,77 | 63 | 0,558 | 511 | 1,396 | 0,08 | 1,66 | 23,68 | |
| 1979 | 0,60 | 6 | 0,018 | 0,53 | 63 | 0,167 | 149 | | | 1,03 | 23,06 | |
| 1980 | 1,28 | 6 | 0,038 | 1,2 | 63 | 0,378 | 340 | | | 1,49 | 30,21 | |
| 1981 | 1,00 | 6 | 0,030 | 0,89 | 63 | 0,280 | 250 | | | 1,62 | 37,05 | |
| 1982 | 0,59 | 6 | 0,018 | 0,75 | 63 | 0,236 | 219 | | | 1,10 | 47,95 | |
| 1983 | 0,82 | 6 | 0,025 | 0,93 | 63 | 0,293 | 268 | | | 1,50 | 69,37 | |
| 1984 | 1,46 | 6 | 0,044 | 1,52 | 63 | 0,479 | 435 | | | 1,97 | 15,34 | |
| 1985 | 0,84 | 6 | 0,025 | 0,84 | 63 | 0,265 | 239 | 0,894 | -0,96 | 1,54 | 26,13 | 5,62 |
| 1986 | 0,41 | 6 | 0,012 | 0,75 | 63 | 0,236 | 224 | 0,619 | -1,18 | 1,45 | 54,36 | 6,03 |
| 1987 | | **4** | | 0,97 | **72** | 0,349 | | 0,939 | -0,16 | 1,41 | 29,41 | 4,60 |
| 1988 | 0,40 | 4 | 0,008 | 0,48 | 72 | 0,173 | 165 | | | 0,86 | 31,96 | 2,99 |
| 1989 | 0,30 | 4 | 0,006 | 0,3 | 72 | 0,108 | 102 | 0,053 | -1,75 | 1,12 | 25,76 | 4,64 |
| 1990 | 0,39 | 4 | 0,008 | 0,39 | 72 | 0,140 | 133 | | | 1,41 | 29,80 | 5,19 |
| 1991 | 1,06 | 4 | 0,021 | 0,92 | 72 | 0,331 | 310 | | | 1,29 | 25,28 | 5,61 |
| 1992 | 0,16 | **7** | 0,006 | 0,24 | **96** | 0,115 | 110 | 0,754 | -0,72 | 1,81 | 52,77 | 6,53 |
| 1993 | 0,17 | 7 | 0,006 | 0,25 | 96 | 0,120 | 114 | | | 1,15 | 27,09 | 4,29 |
| 1994 | 0,10 | 7 | 0,004 | 0,13 | 96 | 0,062 | 59 | | | 0,75 | 36,01 | 2,72 |
| 1995 | 0,37 | 7 | 0,013 | 0,31 | 96 | 0,149 | 136 | | | 1,32 | 30,44 | 4,44 |
| 1996 | 0,68 | 7 | 0,024 | 0,58 | 96 | 0,278 | 255 | 1,166 | -0,13 | 1,77 | 33,44 | 6,46 |

(suite)

| année | RCS P- | P_Olsen P- | Pi P- | RCS P+ | P_Olsen P+ | Pi P+ | uPi | iVAZ P+ | d[iVAZ]c P+ | RDT P+ | RDN P+ | RDP P+ |
|---|---|---|---|---|---|---|---|---|---|---|---|---|
| 1997 | 0,49 | **6** | 0,015 | 0,69 | **94** | 0,324 | 310 | 0,173 | -1,75 | 1,01 | 22,46 | 3,20 |
| 1998 | 1,32 | 6 | 0,040 | 0,93 | 94 | 0,437 | 398 | | | 1,50 | 17,19 | 5,31 |
| 1999 | 0,51 | 6 | 0,015 | 1,04 | 94 | 0,489 | 474 | | | 1,17 | 12,94 | |
| 2000 | 0,80 | **5** | 0,020 | 0,61 | **95** | 0,290 | 270 | | | 0,95 | 28,43 | |
| 2001 | 0,48 | 5 | 0,012 | 0,45 | 95 | 0,214 | 202 | | | 0,43 | 29,96 | |
| 2002 | 0,13 | 5 | 0,003 | 0,11 | 95 | 0,052 | 49 | | | 0,41 | 13,84 | |
| 2003 | 0,24 | 5 | 0,006 | 0,79 | 95 | 0,375 | 369 | | | 1,49 | 32,74 | |
| 2004 | 0,11 | 5 | 0,003 | 0,28 | 95 | 0,133 | 130 | | | 1,11 | 14,80 | |
| 2005 | 0,23 | **7** | 0,008 | 0,16 | **82** | 0,066 | 58 | | | 1,09 | 29,92 | |
| 2006 | 0,41 | 7 | 0,014 | 0,29 | 82 | 0,119 | 105 | | | 1,26 | 16,64 | |
| 2007 | 0,16 | 7 | 0,006 | 0,23 | 82 | 0,094 | 89 | | | 1,05 | 24,36 | |
| 2008 | 0,01 | 7 | 0,000 | 0,07 | 82 | 0,029 | 28 | | | 0,68 | 17,76 | |
| 2009 | 0,84 | 7 | 0,029 | 0,86 | 82 | 0,353 | 323 | | | 1,71 | 16,40 | |
| 2010 | 0,33 | **8** | 0,013 | 0,34 | **84** | 0,143 | 130 | | | 1,25 | 31,27 | |
| 2011 | 0,27 | 8 | 0,011 | 0,57 | 84 | 0,239 | 229 | | | 1,80 | 18,74 | |
| 2012 | 0,15 | 8 | 0,006 | 0,17 | 84 | 0,071 | 65 | | | 1,21 | | |
| 2013 | 0,34 | 8 | 0,014 | 0,48 | 84 | 0,202 | 188 | | | 1,95 | | |
| 2014 | 0,70 | **11** | 0,039 | 0,62 | **74** | 0,229 | 191 | | | 1,47 | | |

Les rendements agronomiques (RDT ; t/ha) et protéiques (RDN ; UN) progressent selon uPi (Figure 6), ce qui reflète que la plus grande activité azotobactérienne (Figure 5) attribuable à ces uPi est concomitante à de telles augmentation de RDT et RDN. Dans les faits, on peut aussi interpréter ces corrélations comme les besoins en uPi que de tels niveaux de RDT et RDN nécessitent. A la Figure 7 par exemple, j'ai simplement inverser les axes de la Figure 6 ; on peut ainsi apprécier le niveau d'uPi qu'un certain niveau de RDT ou RDN présuppose, et préconiser le microdosage du Pi sur cette base. A noter la parenté des graphes à la Figure 7 (uPi, alias dP) et ceux à la Figure 4 (dP, alias uPi). Comme de raison, uPi à lui seul n'explique pas tout l'augmentation des RDT/N constatée, bien qu'une Ancova (non rapportée) factorisant l'effet des années, sections et traitements démontra clairement la contribution fortement significative de ces uPi (dP ; Figure 4). La formalisation multivariée des relations [RDT/N :: uPi] et [iVAZ :: uPi] sont en développement et seront proposées aux utilisateurs prochainement.

**Références**

Allard, VPM et J Le Gouis. 2013. Genetic variability in biomass allocation to roots in wheat is mainly related to crop tillering dynamics and nitrogen status. European Journal of Agronomy, Elsevier, 2013, 46, pp.68-76. <10.1016/j.eja.2012.12.004>. <hal-00759094>

Augusto, Laurent, Florian Delerue, Anne Gallet-Budynek et David L. Acha. 2013. Global assessment of limitation to symbiotic nitrogen Exation by phosphorus availability in terrestrial ecosystems using a meta-analysis approach. Global Biogeochemical Cycles 27 : 804-815, doi:10.1002/gbc.20069

Binkley, Dan, Randy Senock , Kermit Cromack Jr. 2003. Phosphorus limitation on nitrogen Exation by Facaltaria seedlings. Forest Ecology and Management 186 : 171-176

Claude, PP et L Fillion. 2004. Effet de l' apport d'un inoculum bactérien aux résidus de culture de maïs-grain au sol sur le rendement et la qualité de blés d"hiver panifiables en France. Agrosol. 15 (1) : 23-29.

Cockborne, Anne-Maric De, Michel Jauzein, Pierre STENGEL, Roger GUENNELON. Variation du coeffcient de diffusion de NO-3 dans les sols : inZuence de la teneur en eau et de la porosit'e. Agronomie, EDP Sciences, 1988, 8 (10), pp.905-914. <hal-00885060>

Colomb, B, P. Debaeke, C. Jouany et J.M. Nolot. 2007. Phosphorus Management In Low Input Stockless Cropping Systems : Crop and Soil Responses to Contrasting P Régimes In A 36-Year Experiment In Southern France. Europ. J. Agronomy 26 (2007) 154 -165

COMIFER 2011. Calcul de la fertilisation azotée Guide méthodologique pour l'établissement des prescriptions locales Cultures annuelles et prairies Édition 2011. Brochure éditée par le Comifer, Le Diamant A, 92909 Paris La Défense Cedex, ISBN 978-2-910393-09-0

COMIFER 2007. Fertilisation PK : grille de calcul de dose. Le groupe PKMg du COMIFER 2007

Damon, PM, B Bowden T Rose et Z Rengel. 2014. Crop residue contribution to phosphorus pools in agricultural soils : a review. Soil Biol. Biochem. 74 : 127-137

Dyke, G. V. , George, B. J. , Johnston, A. E. , Poulton, P. R. and Todd, A. D. (1983) "The Broadbalk wheat experiment 1968-78: yields and plant nutrients in crops grown continuously and in rotation", Rothamsted Expérimentai Station Report for 1982, Part 2, 5-44

Eisele, KA, DS Schimel, LA Kapustka et WJ Parton. 1989. Effects of available P an N:P ratios on non-symbiotic dinitrogen fixation in tallgrass prairie soils. Oecologia 79 : 471-474

FAO 2008. Efficiency of soil and fertilizer phosphorus use. FAO Fertilizer and Plant Nutrition Bulletin no. 18. Food and agriculture organization of the United Nations (FAO, Rome), 2008

Gupta, VVSR, MM Roper et DK Roget. 2006. Potential for non symbiotic N2 fixation in different agroecological zones of southern Australia. Aust. J. Soil Res. 44 : 343-354

Habib, Rober et Roger Guennelon. 1983. Evaluation du coefficient de diffusion du phosphore en sol de limon argileux calcaire. Agronomie 3 (2), pp.113-121. <hal-00884490>

Halsall DM et AH Gibson. 1986. comparison of two Cellulomonas strains and their interaction with Azospirillum brasilense in dégradation of wheat straw and associated nitrogen fixation. Appl. Environ. Microbiol. 51 : 855-861

Hart, P. B. S. , Powlson, D. S. , Poulton, P. R. , Johnston, A. E. and Jenkinson, D. S. (1993) "The availability of the nitrogen in the crop residues of winter wheat to subséquent crops", Journal of Agricultural Science, 121, 355-362

Howarth, Robert W. et Roxanne Marino. 1988. Nitrogen fixation in freshwater, estuarine, and marine ecosystems. 2. Riogeochemical control9. Limnol. Oceanogr., 33(4, part 2) : 688-701

Idriss, EE, O Makarewicz, A Farouk, K Rosner, R Greiner, H Bochow, T Richter et R Borriss. 2002. Extracellular phytase activity of Bacillus amyloliquefaciens FZB45 contributes to its plant-growth-promoting effect. Microbiology 148, 2097-2109

Justes, E, B Mary, JM Meynard, JM Machet et L Thélier-Huche. 1994. Détermination of a critical nitrogen dilution curve for winter wheat crops. Annals of Botany 74 : 397-407

Ladha, J. K. et al. 2016. Global nitrogen budgets in cereals: A 50-year assessment for maize, rice, and wheat production systems. Sci. Rep. 6, 19355; doi: 10.1038/srep19355 (2016).

Manzoni, Stefano, John A. Trofymow, Robert B. Jackson et Amilcare Porporato. 2010. Stoichiometric controls on carbon, nitrogen, and phosphorus dynamics in decomposing litter. Ecological Monographs, 80(1), pp. 89-106

Morel, C, C Plenchette et JC Fardeau. 1992. La fertilisation phosphatée raisonnée de la culture du blé. Agronomie 12 : 565-579

Neff, JC et GP Asner. 2001. Dissolved organic carbon in terrestrial ecosystems : synthesis and a model. Ecosystems 4 : 29-48.

NGWCLC 2003. Review of ammonium atténuation in soil and groundwater. National Ground and Contaminated Land Centre (UK), report NC/02/49

Poll, C. J. Ingwersen M. Stemmer ,M.H. Gerzabek et E. Kandeler. 2006. Mechanisms of solute transport affect small-scale abundance and functiono f soil microorganisms in the detritusphere. European Journal of Soil Science, August 2006, 57, 583-595 / doi: 10.1111/j.1365-2389.2006.00835.x

Reed, Sasha C, Cory C. Cleveland et Alan R. Townsend. 2013. Relationships among phosphorus, molybdenum and free-living nitrogen fixation in tropical rain forests: results from observational and expérimenta! analyses. Biogeochemistry DOI 10.1007/S10533-013-9835-3

Reed, Sasha C, Cory C. Cleveland, et Alan R. Townsend. 2011. Functional Ecology of Free-Living Nitrogen Fixation: A Contemporary Perspective. Annu. Rev. Ecol. Evol. Syst. 2011. 42:489-512

Reed, Sasha C, Timothy R. Seastedt , Colin M. Mann , Katharine N. Suding , Alan R. Townsend , Karie L. Cherwin. 2007. Phosphorus fertilization stimulâtes nitrogen Exation and increases inorganic nitrogen concentrations in a restored prairie. applied soil ecology 36 : 238-242

Rose TJ, L Liu et M Wissuwa. 2013. Improving phosphorus efficiency in cereal crops : is breeeding for reduced grains phosphorus concentration part of the solution ? Frontiers in Plant Science / November 2013 / Vol. 4 / Article 444.

Sattari SZ, AF Bouwman, KE Giller et MK van Ittersum. 2012. Residual soil phosphorus as the missing pièce in the global phosphorus crisis puzzle. PNAS 109 (16) : 6348-6353

Shelton DP et J Jasa 2009. Estimating percent residue cover using the line-transect method. NebGuide, University of Nebraska-Lincoln Extension, Institute of Agriculture and Natural Resources. G1931/ February 2009 / www.extension.unl.edu/publications

Smith, Val H. 1992. Effects of Nitrogen: Phosphorus Supply Ratios on Nitrogen Fixation in Agricultural and Pastoral Ecosystems. Biogeochemistry, Vol. 18, No. 1. (1992), pp. 19-35.

Steiner JL, HH Schomberg, PW Unger et J Cresap. 2000. Biomass and Residue Cover Relationships of Fresh and Decomposing Small Grain Residue. Soil Sci. Soc. Am. J. 64:2109-2114

Steiner, JL, HH Schomberg et JE Morrison. 1994a. Measuring surface residue and calculating losses from décomposition and redistribution. pp. 21-29 In W. C. Moldenhauer (Managing Ed.) and B. A. Stewart (Regional Ed.) Crop Residue Management to Reduce Erosion and Improve Soil Quality: Southern Great Plains. USDA-ARS Conservation Research Report No. 37.

Steiner, JL, HH Schomberg et PW Unger. 1995. Residue Décomposition Submodel. pp. D1-D12, In L. J. Hagen, L. E. Wagner, and J. Tatarko. 1995. Wind Erosion Prédiction System (WEPS). Technical Documentation. Beta Release 95-08. USDA, ARS, Wind Erosion Research Unit, Throckmorton Hall, Manhattan, Kansas, 66506.

Steiner, JL. 1994. Crop residue effects on water conservation. pp. 41-76, In P. W. Unger (ed.) Managing Agricultural Residues. Lewis Publ., Boca Raton, FL.

Steiner, JL., HH Schomberg, CL Douglas Jr. et AL Black. 1994b. Standing stem persistence in no-tillage small grain fields. Agron. J. 86:76-81.

Thibaud MC, C Morel et JC Fardeau. 1988. Contribution of phosphorus issued form crop residues to plant nutrition. Soil Sci. Plant Nutr. 34 : 481-491

Ussiri, D. A., P. N. S. Mnkeni , A. F. MacKenzie et J. M. R. Seraoka 1998. Soil test calibration studies for formulation of phosphorus fertilizer recommendations for maize in Morogoro district, Tanzania. II. estimation of optimum fertilizer rates, Communications in Soil Science and Plant Analysis, 29 (17-18) : 2815-2828

Vitousek, Peter M. et Robert W. Howarth. 1991. Nitrogen Limitation on Land and in the Sea: How can It Occur? Biogeochemistry, Vol. 13, No. 2 (1991), pp. 87-115

Wang, Y.-P., B. Z. Houlton, and C. B. Field. 2007. A model of biogeochemical cycles of carbon, nitrogen, and phosphorus including symbiotic nitrogen fixation and phosphatase production. Global Biogeochemical Cycles, VOL. 21, GB1018, doi:10.1029/2006GB002797, 2007

**Revendications**

1. **Méthode de fertilisation phosphorique pour cultures agronomiques** comprenant l'application d'une dose dP de phosphore calibrée selon un procédé comprenant l'établissement d'une courbe de réponse mitscherlichienne décrivant l'activité diazotrophe de la flore azotobactérienne dans un sol arable en proximité de résidus de la culture précédente enfouis, courbe de réponse dite ici de type MITAZB, et cela en fonction, (i) des teneurs en C, P, voire N, desdits résidus de culture cellulosiques, avantageusement pailleux, au sol (RCS) avant leur enfouissement en pré - semis d'une culture agronomique suivante et, (ii) d'un équivalent de phosphore exogène, dit ici dose P - ou dP, proportionnel aux susdites teneurs en C et P des RCS, la méthode comprenant:

   > la détermination de la quantité desdits RCS, soit indirectement via une relation empirique fonction du rendement de la culture précédente (RDT), soit plus directement au sol via la détermination du degré de couverture du sol par ces résidus (cRCS) ;
   > la détermination des teneurs en N (azote) et en P (phosphore) desdits RCS de manière à obtenir Cpoi, i.e. la quantité de P initialement retournée au sol par ces RCS
   > le calcul de dP en fonction de Cpoi capable d'assurer que le niveau d'activité diazoptrophe en proximité desdits résidus de culture une fois enfouis (pAZB) maximale,

   et où dP est sous forme soluble et appliquée par pulvérisation liquide directement aux RCS avant leur enfouissement, avantageusement en pré - semis d'une grande culture agronomique telle que le blé tendre, le colza, ou encore toute autre grandes cultures agronomiques pouvant être semis en présence de résidus de culture cellulosiques, avantageusement pailleux, au sol.

2. **Méthode de fertilisation phosphorique pour cultures agronomiques** selon la revendication précédente **caractérisée en ce que** le niveau d'activité diazoptrophe en proximité desdits résidus de culture une fois enfouis (pAZB) est défini comme l'équilibre entre l'immobilisation nette de l'azote du sol, phénomène favorable à ladite activité diazotrophe, et l'immobilisation nette du phosphore du sol, phénomène défavorable à ladite activité diazotrophe.

3. **Méthode de fertilisation phosphorique pour cultures agronomiques** selon la revendication précédente **caractérisée en ce que** l'équilibre entre l'immobilisation nette de l'azote du sol, phénomène favorable à ladite activité diazotrophe, et l'immobilisation nette du phosphore du sol, phénomène défavorable à ladite activité diazotrophe, est défini formellement comme le rapport entre pAZBn et pAZBp (pAZBn / pAZBp), et plus avantageusement comme la différence entre pAZBn et pAZBp (pAZB - pAZB), pAZB -n et -p étant, respectivement les ratios rCN/rCNc et rCP/rCPc, i.e. les rapports entre ratios C/N (ou C/P) de la résidusphère à l'équilibre et C/N (ou C/P) critique en dessus du quel l'azote (ou le phosphore) est libéré sous forme minéral (minéralisation).

4. **Méthode de fertilisation phosphorique pour cultures agronomiques** selon une quelconque des revendications précédentes **caractérisée en ce que** le calcul de dP en fonction de Cpoi et d'un coefficient b issue d'une relation MITAZB de type -

$$pAZB = A \cdot [1 - exp(-c \cdot (\underline{b} \cdot Cpoi + dP))]$$

lorsque dP est un équivalent du P apporté aux RCS et/ou au sol affectant pAZB, dont la valeur est comprise entre 0,10 et 0,50, plus particulièrement entre 0,15 et 0,30, et avantageusement ici d'environs 0,20, peut être effectué comme suite ;

$$dP = -\underline{b} \text{ x Cpoi}$$

dP pouvant ainsi être exprimé en kg-P par m3 de sol, mg-P / kg-sol, ou encore en kg-P par hectare une fois les conversions unitaires nécessaire effectuées.

5. **Méthode de fertilisation phosphorique pour cultures agronomiques** selon une quelconque des revendications précédentes **caractérisée en ce que** la détermination de la quantité des résidus de culture cellulosiques au sol (RCS) est déterminée indirectement à partir du rendement de la culture précédente (RDT) selon des relations empiriques de type ;

$$RCS = [a \text{ x RDT} + b]$$

ou encore plus directement via la détermination préalable du degré de couverture du sol (cRCS ; %), RCS pouvant être déterminé par des relation empiriques de type ;

$$RCS_{BTH} = p \text{ x } exp(q \text{ x cRCS})$$

sachant que a, $b$, $p$ et $q$ sont des coefficients de régressions spécifiques au différents types de RCS.

6. **Méthode de fertilisation phosphorique pour cultures agronomiques** selon la revendication précédente **caractérisée en ce que** la détermination de la quantité des résidus de culture cellulosiques au sol (RCS ; g/m$^2$) est déterminée indirectement à partir du rendement de la culture précédente (RDT ; g/m$^2$) selon une des relations empiriques suivantes ;

$$RCS_{BTH} = [0,911 \text{ x RDT} + 164]$$

$$RCS_{maïs} = [1,51 \text{ x RDT} + 3,7 - RDT]$$

$$RCS_{sorgho} = [2{,}56 \times RDT + 0.4 - RDT]$$

$$RCS_{céréales} = [2{,}13 \times RDT + 1{,}1 - RDT]$$

ou encore plus directement via la détermination préalable du degré de couverture du sol (cRCS ; %), la quantité de RCS (RCS ; t/ha) pouvant être déterminé par l'une des relation empiriques suivantes ;

$$RCS_{BTH} = 0{,}0633 \times \exp(0{,}0493 \times cRCS) \mid R2 = 0{,}9275$$

$$RCS_{Maïs} = 0{,}0519 \times \exp(0{,}0554 \times cRCS) \mid R2 = 0{,}8647$$

$$RCS_{Tournesol} = 0{,}0015 \times cRCS^2 - 0{,}003 \times cRCS + 0{,}378 \mid R2 = 0{,}9928$$

**7. Méthode de fertilisation phosphorique pour cultures agronomiques** selon une quelconque des revendications précédentes **caractérisée en ce que** les cultures agronomiques sont des grandes cultures agronomiques d'hivers choisies parmi un groupe de cultures comprenant les céréales, y compris le blé, l'avoine, le seigle, le triticale, l'orge, le colza, le lin, ou encore toute autre grandes culture agronomique pouvant être semis en présence de résidus de culture cellulosiques, avantageusement pailleux au sol.

**8. Méthode de fertilisation phosphorique pour cultures agronomiques** selon une quelconque des revendications précédentes **caractérisée en ce que** la dP sous forme pulvérulente est appliquée par pulvérisation solide directement aux RCS avant leur enfouissement, avantageusement en pré - semis d'une grande culture agronomique telle que le blé tendre, le colza, ou encore toute autre grandes cultures agronomiques pouvant être semis en présence de résidus de culture cellulosiques, avantageusement pailleux, au sol.

**9. Méthode de fertilisation phosphorique pour cultures agronomiques** selon la revendication précédente **caractérisée en ce que** les résidus de culture cellulosique au sol sont bactérisés à l'aide d'une préparation bactérienne réputée capable d'augmenter l'activité diazotrophe, voire l'activité de réduction de l'acétylène (ARA), du sol en proximité desdits résidus de culture un fois enfouis.

**10. Méthode de fertilisation phosphorique pour cultures agronomiques** selon la revendication précédente **caractérisée en ce que** la préparation bactérienne contient des biomasses bactériennes capables de minéraliser partiellement en P inorganique le P organique, notamment sous forme de sels d'acide phytique.

**11. Méthode de fertilisation phosphorique pour cultures agronomiques** selon les deux revendications précédentes **caractérisée en ce que** la préparation bactérienne est combinée avec dP au sein d'une même bouillie pulvérisable directement sur lesdits RCS.

**Patentansprüche**

**1. Verfahren zur Phosphordüngung von landwirtschaftlichen Kulturen,** das die Anwendung einer Phosphordosis dP umfasst, die gemäß einem Verfahren kalibriert wurde, das die Erstellung einer Mitscherlichschen Reaktionskurve umfasst, die die diazotrophe Aktivität der azotobakteriellen Flora in einem Ackerboden in der Nähe von vergrabenen Rückständen der vorhergehenden Kultur beschreibt, wobei die Reaktionskurve hier als MITAZB-Typ bezeichnet wird, und zwar in Abhängigkeit, (i) des C-, P-oder sogar N-Gehalts der genannten zellulosehaltigen, vorzugsweise strohhaltigen Kulturrückstände im Boden (RCS) vor ihrer Einbettung als Vorbereitung vor der Saat einer nachfolgenden landwirtschaftlichen Kultur und (ii) eines Äquivalents von exogenem Phosphor, hier als P-Dosis oder dP bezeichnet, das proportional zu den genannten C- und P-Gehalten der RCS ist, wobei das Verfahren umfasst;

> die Bestimmung der Menge der genannten RCS, entweder indirekt über eine empirische Beziehung, die vom Ertrag der vorhergehenden Kultur abhängt (RDT), oder direkter am Boden über die Bestimmung des Grades der Bodenbedeckung durch diese Rückstände (cRCS);

> die Bestimmung des Gehalts an N (Stickstoff) *und* P (Phosphor) der genannten SCRs, um Cpoi zu erhalten, d.h. die Menge an P, die ursprünglich durch diese SCRs in den Boden zurückgeführt wurde
> die Berechnung von dP als Funktion von Cpoi, die sicherstellen kann, dass das Niveau der diazoptrophen Aktivität in der Nähe der einmal vergrabenen Ernterückstände (pAZB) maximal ist,

und wobei dP in löslicher Form vorliegt und durch Flüssigzerstäubung direkt auf die RCS vor deren Vergraben aufgebracht wird, vorteilhafterweise vor der Aussaat einer landwirtschaftlichen Hauptkultur wie Weichweizen, Raps oder auch jeder anderen landwirtschaftlichen Hauptkultur, die in Gegenwart von zellulosehaltigen, vorteilhafterweise strohhaltigen Kulturrückständen am Boden ausgesät werden kann.

2. **Verfahren zur Phosphordüngung von landwirtschaftlichen Kulturen** nach dem vorhergehenden Anspruch, **dadurch gekennzeichnet, dass** das Niveau der diazotrophen Aktivität in der Nähe der genannten Kulturrückstände nach dem Vergraben (pAZB) als das Gleichgewicht zwischen der Nettoimmobilisierung von Bodenstickstoff, einem Phänomen, das für die diazotrophe Aktivität günstig ist, und der Nettoimmobilisierung von Bodenphosphor, einem Phänomen, das für die diazotrophe Aktivität ungünstig ist, definiert ist.

3. **Verfahren zur Phosphordüngung von landwirtschaftlichen Kulturen** nach dem vorhergehenden Anspruch, **dadurch gekennzeichnet, dass** das Gleichgewicht zwischen der Nettoimmobilisierung von Bodenstickstoff, einem Phänomen, das für die genannte diazotrophe Aktivität günstig ist, und der Nettoimmobilisierung von Bodenphosphor, formell definiert ist als das Verhältnis zwischen pAZBn und pAZBp (pAZBn / pAZBp) und vorteilhafterweise als die Differenz zwischen pAZBn und pAZBp (pAZB - pAZB), wobei pAZB -n und -p, bzw. die Verhältnisse rCN/rCNc bzw. rCP/rCPc sind, d. h. die Beziehungen zwischen den C/N- (oder C/P-) Quotienten der Residusphäre im Gleichgewicht und dem kritischen C/N- (oder C/P-) Verhältnis, bei dessen Unterschreiten der Stickstoff (oder Phosphor) in mineralischer Form freigesetzt wird (Mineralisierung).

4. Verfahren zur Phosphordüngung von landwirtschaftlichen Kulturen nach einem der vorhergehenden Ansprüche, **dadurch gekennzeichnet, dass** die Berechnung von dP als Funktion von Cpoi und eines Koeffizienten $\underline{b}$ aus einer MITAZB-Beziehung des Typs -

$$pAZB = A \cdot [1 - exp(-c \cdot (\underline{b} \cdot Cpoi + dP))]$$

wenn dP ein Äquivalent des P ist, das in die RCS und/oder den pAZB beeinflussenden Boden eingebracht wird, dessen Wert zwischen 0,10 und 0,50, insbesondere zwischen 0,15 und 0,30, und hier vorzugsweise um 0,20 liegt, wie folgt durchgeführt werden kann;

$$dP = -\underline{b} \times Cpoi$$

dP kann somit in kg-P pro m3 Boden, mg-P / kg-Boden oder auch in kg-P pro Hektar ausgedrückt werden, nachdem die notwendigen Umrechnungen pro Einheit vorgenommen wurden.

5. **Verfahren zur Phosphordüngung von landwirtschaftlichen Kulturen** nach einem der vorhergehenden Ansprüche, **dadurch gekennzeichnet, dass** die Bestimmung der Rückstandsmenge von zellulosehaltigen Kulturen im Boden (RCS) indirekt aus dem Ertrag der Vorfrucht (RDT) bestimmt wird, nach empirischen Beziehungen des Typs;

$$RCS = [a \times RDT + b]$$

oder noch direkter über die vorherige Bestimmung des Bodenbedeckungsgrades (cRCS; %), wobei RCS bestimmt werden kann durch empirische Beziehungen vom Typ;

$$RCS_{BTH} = p \times exp(q \times cRCS)$$

wobei *a, b, p* und *q* spezifische Regressionskoeffizienten für die verschiedenen Arten von RCSs sind.

6. **Verfahren zur Phosphordüngung von landwirtschaftlichen Kulturen** nach dem vorhergehenden Anspruch, **dadurch gekennzeichnet, dass** die Bestimmung der Menge der zellulosehaltigen Kulturrückstände am Boden (RCS; g/m$^2$) indirekt aus dem Ertrag der vorhergehenden Kultur (RDT; g/m$^2$) gemäß einer der folgenden empirischen Beziehungen bestimmt wird;

$$RCS_{Winterweichweizen} = [0,911 \times RDT + 164]$$

$$RCS_{Mais} = [1,51 \times RDT + 3,7 - RDT]$$

$$RCS_{Hirse} = [2,56 \times RDT + 0,4 - RDT]$$

$$RCS_{Getreide} = [2,13 \times RDT + 1,1 - RDT]$$

oder noch direkter über die vorherige Bestimmung des Bodenbedeckungsgrades (cRCS; %), wobei die Menge an RCS (RCS; t/ha) durch eine der folgenden empirischen Beziehungen bestimmt werden kann;

$$RCS_{Winterweichweizen} = 0,0633 \times exp(0,0493 \times cRCS) \,|\, R2 = 0,9275$$

$$RCS_{Mais} = 0,0519 \times exp\,(0,0554 \times cRCS) \,|\, R2 = 0,8647$$

$$RCS_{Sonnenblume} = 0,0015 \times cRCS^2 - 0,003 \times cRCS + 0,378 \,|\, R2 = 0,9928$$

7. **Verfahren zur Phosphordüngung von landwirtschaftlichen Kulturen** nach einem der vorhergehenden Ansprüche, **dadurch gekennzeichnet, dass** die landwirtschaftlichen Kulturen Winter-Hauptkulturen sind, die aus einer Gruppe von Kulturen ausgewählt sind, die Getreide, einschließlich Weizen, Hafer, Roggen, Triticale, Gerste, Raps, Flachs oder auch jede andere landwirtschaftliche Hauptkultur umfasst, die in Gegenwart von zellulosehaltigen, vorzugsweise strohigen Kulturrückständen am Boden ausgesät werden kann.

8. **Verfahren zur Phosphordüngung von landwirtschaftlichen Kulturen** nach einem der vorhergehenden Ansprüche, **dadurch gekennzeichnet, dass** das dP in Pulverform durch Feststoffsprühen direkt auf die RCS aufgebracht wird, bevor diese vergraben werden, vorteilhafterweise vor der Saat einer landwirtschaftlichen Hauptkultur wie Weichweizen, Raps oder auch jeder anderen landwirtschaftlichen Hauptkultur, die in Gegenwart von zellulosehaltigen, vorteilhafterweise strohhaltigen Kulturrückständen am Boden ausgesät werden kann.

9. **Verfahren zur Phosphordüngung von landwirtschaftlichen Kulturen** nach dem vorhergehenden Anspruch, **dadurch gekennzeichnet, dass** die Rückstände von Zellulosekulturen im Boden mit einem Bakterienpräparat bakteriell behandelt werden, von dem angenommen wird, dass es die diazotrophe Aktivität und sogar die Acetylenreduktionsaktivität (ARA) des Bodens in der Nähe der vergrabenen Kulturrückstände erhöhen kann.

10. **Verfahren zur Phosphordüngung von landwirtschaftlichen Kulturen** nach dem vorhergehenden Anspruch, **dadurch gekennzeichnet, dass** das Bakterienpräparat Bakterienbiomassen enthält, die in der Lage sind, organisches P, insbesondere in Form von Phytinsäuresalzen, teilweise zu anorganischem P zu mineralisieren.

11. **Verfahren zur Phosphordüngung von landwirtschaftlichen Kulturen** nach den beiden vorhergehenden Ansprüchen, **dadurch gekennzeichnet, dass** das Bakterienpräparat mit dP innerhalb einer einzigen, direkt auf die genannten RCS sprühbaren Brühe kombiniert wird.

**Claims**

1. **Method of phosphorus fertilization for agronomic crops** comprising the application of a dose dP of phosphorus calibrated according to a method comprising the establishment of a Mitscherlichian response curve describing the diazotrophic activity of the azotobacterial flora in arable soil in the vicinity of residues of the previous crop buried, response curve here referred to as MITAZB, and this according to, (i) the C, P, or even N content of the said cellulosic crop residues, advantageously straw-like, in the soil (RCS) before they are buried pre-sowing of a subsequent agronomic crop and, (ii) an exogenous phosphorus equivalent, here referred to as the P or dP dose, proportional to the above-mentioned C and P levels of the RCSs, the method comprising;

> the determination of the quantity of these RCSs, either indirectly via an empirical relationship as a function of the yield of the previous crop (RDT), or more directly to the soil via the determination of the degree of soil cover by these residues (cRCS);
> the determination of the N (nitrogen) *and P* (phosphorus) contents of the RCSs in order to obtain Cpoi, i.e. the quantity of P initially returned to the soil by these RCSs
> the calculation of dP as a function of Cpoi capable of ensuring that the level of diazoptrophic activity in the vicinity of said crop residues once buried (pAZB) is maximum,

and where dP is in soluble form and applied by liquid spray directly to the RCS before they are buried, advantageously as a pre-sowing of a field agronomic crop such as common wheat, rapeseed, or any other agronomic field crop that can be sown in the presence of cellulosic crop residues, advantageously straw, on the soil.

2. **A method of phosphorus fertilization for agronomic crops** according to the preceding claim **characterized in that** the level of diazoptrophic activity in the vicinity of said crop residues once buried (pAZB) is defined as the equilibrium between the net immobilization of soil nitrogen, a phenomenon favorable to said diazotrophic activity, and the net immobilization of soil phosphorus, a phenomenon unfavorable to said diazotrophic activity.

3. **Method of phosphorus fertilization for agronomic crops** according to the preceding claim **characterized in that** the equilibrium between the net immobilization of soil nitrogen, a phenomenon favorable to said diazotrophic activity, and the net immobilization of soil phosphorus, a phenomenon unfavorable to said diazotrophic activity, is formally defined as the ratio between pAZBn and pAZBp (pAZBn / pAZBp), and more advantageously as the difference between pAZBn and pAZBp (pAZB - pAZB), where pAZB -n and -p are the rCN/rCNc and rCP/rCPc ratios, respectively, i.e. the ratios between the C/N (or C/P) of the equilibrium residue and the critical C/N (or C/P) above which nitrogen (or phosphorus) is released in mineral form (mineralization).

4. **Method of phosphorus fertilization for agronomic crops** according to any of the preceding claims, **characterized in that** the calculation of dP as a function of Cpoi and a coefficient *b* from a MITAZB relation of type -

$$pAZB = A \cdot [1 - exp(-c \cdot (\underline{b} \cdot Cpoi + dP))]$$

when dP is an equivalent of the P applied to the RCS and/or to the soil affecting pAZB, the value of which is between 0.10 and 0.50, more particularly between 0.15 and 0.30, and advantageously here of about 0.20, can be carried out as follows;

$$dP = -\underline{b} \text{ x Cpoi}$$

dP can thus be expressed in kg-P per m3 of soil, mg-P / kg-soil, or in kg-P per hectare once the necessary unit conversions have been made.

5. A **method of phosphorus fertilization for agronomic crops** according to any of the preceding claims, **characterized in that** the determination of the amount of cellulosic crop residues in the soil (RCS) is determined indirectly from the yield of the previous crop (RDT) according to empirical relationships of type;

$$RCS = [a \text{ x RDT} + b]$$

or even more directly through the prior determination of the degree of land cover (cRCS; %), RCS that can be determined by empirical type relationships;

$$RCS_{BTH} = p \times \exp(q \times cRCS)$$

knowing that *a, b, p* and *q* are regression coefficients specific to the different types of RCSs.

6. **A method of phosphorus fertilization for agronomic crops** according to the preceding claim **characterized in that** the determination of the amount of cellulosic crop residues in the soil (RCS; g/m2) is determined indirectly from the yield of the previous crop (RDT; g/m2) according to one of the following empirical relationships;

$$RCS_{BTH} \quad = [0.911 \times RDT + 164]$$

$$RCS_{maize} \quad = [1.51 \times TDR + 3.7 - TDI]$$

$$RCS_{sorghum} \quad = [2.56 \times TDR + 0.4 - RDT]$$

$$RCS_{cereals} \quad = [2.13 \times RDT + 1.1 - RDT]$$

or even more directly through the prior determination of the degree of land cover (cRCS; %), the amount of RCS (RCS; t/ha) that can be determined by one of the following empirical relationships;

$$RCS_{BTH} \quad = 0.0633 \times \exp(0.0493 \times cRCS) \mid R^2 = 0.9275$$

$$RCS_{Maïs} \quad = 0.0519 \times \exp(0.0554 \times cRCS) \mid R^2 = 0.8647$$

$$RCS_{Tournesol} = 0.0015 \times cRCS^2 - 0.003 \times cRCS + 0.378 \mid R^2 = 0.9928$$

7. **A method of phosphorus fertilization for** agronomic crops according to any of the preceding claims **characterized in that** the agronomic crops are winter agronomic field crops selected from a group of crops including cereals, including wheat, oats, rye, triticale, barley, rapeseed, flax, or any other major agronomic crop which can be sown in the presence of cellulosic crop residues, advantageously straw on the soil.

8. **Method of phosphorus fertilization for** agronomic crops according to any of the preceding claims **characterized in that** the dP in powdery form is applied by solid spraying directly to the RCSs before they are buried, advantageously in pre-sowing of a major agronomic crop such as common wheat, rapeseed, or any other agronomic field crop which can be sown in the presence of cellulosic crop residues, advantageously strawy, on the soil.

9. **A method of phosphorus fertilization for agronomic crops** according to the preceding claim **characterized in that** the cellulosic crop residues on the soil are bacteria inoculated using a bacterial preparation known to be capable of increasing the diazotrophic activity, or even the acetylene reduction activity (ARA), of the soil in the vicinity of said crop residues once buried.

10. **A method of phosphorus fertilization for agronomic crops** according to the preceding claim **characterized in that** the bacterial preparation contains bacterial biomass capable of partially mineralizing organic P into inorganic P, for instance in the form of phytic acid salts.

11. **A method of phosphorus fertilization for agronomic crops** according to the two preceding claims, **characterized in that** the bacterial preparation is combined with dP in a single sprayable slurry directly on said RCS.

Figure 1

Figure 2

Figure 3

Figure 4

Figure 5

Figure 6

$y = 272,11x^{0,7879}$
$R^2 = 0,3459$

○ uPi (g/ha)

RDT (t/ha)

$y = 35,941x^{0,6601}$
$R^2 = 0,2987$

○ uPi (g/ha)

RDN (UN)

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5668719 A
- FR 2910230 A1
- EP 2774467 A
- FR 1501587
- EP 2647695 A

- EP 2942621 A
- EP 2845906 A, Claude et Fillon
- EP 2730926 A
- EP 2728353 A
- EP 2345319 A

**Littérature non-brevet citée dans la description**

- Genetic variability in biomass allocation to roots in wheat is mainly related to crop tillering dynamics and nitrogen status. **ALLARD, VPM ; J LE GOUIS.** European Journal of Agronomy. Elsevier, 2013, vol. 46, 68-76
- **AUGUSTO ; LAURENT ; FLORIAN DELERUE ; ANNE GALLET-BUDYNEK ; DAVID L. ACHA.** Global assessment of limitation to symbiotic nitrogen Exation by phosphorus availability in terrestrial ecosystems using a meta-analysis approach. *Global Biogeochemical Cycles,* 2013, vol. 27, 804-815
- **BINKLEY ; DAN ; RANDY SENOCK ; KERMIT CROMACK JR.** Phosphorus limitation on nitrogen Exation by Facaltaria seedlings. *Forest Ecology and Management,* 2003, vol. 186, 171-176
- **CLAUDE, PP ; L FILLION.** Effet de l' apport d'un inoculum bactérien aux résidus de culture de maïs-grain au sol sur le rendement et la qualité de blés d''hiver panifiables en France. *Agrosol.,* 2004, vol. 15 (1), 23-29
- Variation du coeffcient de diffusion de NO-3 dans les sols : inZuence de la teneur en eau et de la porosit'e. **COCKBORNE ; ANNE-MARIC DE ; MICHEL JAUZEIN ; PIERRE STENGEL ; ROGER GUENNELON.** Agronomie. EDP Sciences, 1988, vol. 8, 905-914
- **COLOMB, B ; P. DEBAEKE ; C. JOUANY ; J.M. NOLOT.** Phosphorus Management In Low Input Stockless Cropping Systems : Crop and Soil Responses to Contrasting P Régimes In A 36-Year Experiment In Southern France. *Europ. J. Agronomy,* 2007, vol. 26, 154-165
- Calcul de la fertilisation azotée Guide méthodologique pour l'établissement des prescriptions locales Cultures annuelles et prairies. Comifer, 2011
- Fertilisation PK : grille de calcul de dose. Le groupe PKMg du COMIFER, 2007

- **DAMON, PM ; B BOWDEN ; T ROSE ; Z RENGEL.** Crop residue contribution to phosphorus pools in agricultural soils : a review. *Soil Biol. Biochem.,* 2014, vol. 74, 127-137
- **DYKE, G. V. ; GEORGE, B. J. ; JOHNSTON, A. E. ; POULTON, P. R. ; TODD, A. D.** The Broadbalk wheat experiment 1968-78: yields and plant nutrients in crops grown continuously and in rotation. *Rothamsted Expérimentai Station Report,* 1982, 5-44
- **EISELE, KA ; DS SCHIMEL ; LA KAPUSTKA ; WJ PARTON.** Effects of available P an N:P ratios on non-symbiotic dinitrogen fixation in tallgrass prairie soils. *Oecologia,* 1989, vol. 79, 471-474
- Efficiency of soil and fertilizer phosphorus use. FAO Fertilizer and Plant Nutrition Bulletin. Food and agriculture organization of the United Nations, 2008
- **GUPTA, VVSR ; MM ROPER ; DK ROGET.** Potential for non symbiotic N2 fixation in different agroecological zones of southern Australia. *Aust. J. Soil Res.,* 2006, vol. 44, 343-354
- **HABIB, ROBER ; ROGER GUENNELON.** Evaluation du coefficient de diffusion du phosphore en sol de limon argileux calcaire. *Agronomie,* 1983, vol. 3 (2), 113-121
- **HALSALL DM ; AH GIBSON.** comparison of two Cellulomonas strains and their interaction with Azospirillum brasilense in dégradation of wheat straw and associated nitrogen fixation. *Appl. Environ. Microbiol.,* 1986, vol. 51, 855-861
- **HART, P. B. S. ; POWLSON, D. S. ; POULTON, P. R. ; JOHNSTON, A. E ; JENKINSON, D. S.** The availability of the nitrogen in the crop residues of winter wheat to subséquent crops. *Journal of Agricultural Science,* 1993, vol. 121, 355-362
- **HOWARTH, ROBERT W. ; ROXANNE MARINO.** Nitrogen fixation in freshwater, estuarine, and marine ecosystems. 2. Riogeochemical control9. *Limnol. Oceanogr,* 1988, vol. 33 (4), 688-701

- **IDRISS, EE ; O MAKAREWICZ ; A FAROUK ; K ROSNER ; R GREINER ; H BOCHOW ; T RICHTER ; R BORRISS.** Extracellular phytase activity of Bacillus amyloliquefaciens FZB45 contributes to its plant-growth-promoting effect. *Microbiology,* 2002, vol. 148, 2097-2109
- **JUSTES, E ; B MARY ; JM MEYNARD ; JM MACHET ; L THÉLIER-HUCHE.** Détermination of a critical nitrogen dilution curve for winter wheat crops. *Annals of Botany,* 1994, vol. 74, 397-407
- **LADHA, J. K. et al.** Global nitrogen budgets in cereals: A 50-year assessment for maize, rice, and wheat production systems. *Sci. Rep.,* 2016, vol. 6, 19355
- **MANZONI ; STEFANO ; JOHN A. TROFYMOW ; ROBERT B. JACKSON ; AMILCARE PORPORATO.** Stoichiometric controls on carbon, nitrogen, and phosphorus dynamics in decomposing litter. *Ecological Monographs,* 2010, vol. 80 (1), 89-106
- **MOREL, C ; C PLENCHETTE ; JC FARDEAU.** La fertilisation phosphatée raisonnée de la culture du blé. *Agronomie,* 1992, vol. 12, 565-579
- **NEFF, JC ; GP ASNER.** Dissolved organic carbon in terrestrial ecosystems : synthesis and a model. *Ecosystems,* 2001, vol. 4, 29-48
- report NC/02/49. Review of ammonium atténuation in soil and groundwater. National Ground and Contaminated Land Centre, 2003
- **POLL, C. ; J. INGWERSEN ; M. STEMMER ; M.H. GERZABEK ; E. KANDELER.** Mechanisms of solute transport affect small-scale abundance and functiono f soil microorganisms in the detritusphere. *European Journal of Soil Science,* Août 2006, vol. 57, 583-595
- **REED ; SASHA C ; CORY C. CLEVELAND ; ALAN R. TOWNSEND.** Relationships among phosphorus, molybdenum and free-living nitrogen fixation in tropical rain forests: results from observational and expérimenta! analyses. *Biogeochemistry,* 2013
- **REED ; SASHA C ; CORY C. CLEVELAND ; ALAN R. TOWNSEND.** Functional Ecology of Free-Living Nitrogen Fixation: A Contemporary Perspective. *Annu. Rev. Ecol. Evol. Syst.,* 2011, vol. 42, 489-512
- **REED ; SASHA C ; TIMOTHY R. SEASTEDT ; COLIN M. MANN ; KATHARINE N. SUDING ; ALAN R. TOWNSEND ; KARIE L. CHERWIN.** *Phosphorus fertilization stimulâtes nitrogen Exation and increases inorganic nitrogen concentrations in a restored prairie. applied soil ecology,* 2007, vol. 36, 238-242
- **ROSE TJ ; L LIU ; M WISSUWA.** Improving phosphorus efficiency in cereal crops : is breeeding for reduced grains phosphorus concentration part of the solution. *Frontiers in Plant Science,* Novembre 2013, vol. 4

- **SATTARI SZ ; AF BOUWMAN ; KE GILLER ; MK VAN ITTERSUM.** Residual soil phosphorus as the missing pièce in the global phosphorus crisis puzzle. *PNAS,* 2012, vol. 109 (16), 6348-6353
- Estimating percent residue cover using the line-transect method. **SHELTON DP ; J JASA.** Neb-Guide. University of Nebraska-Lincoln Extension, Institute of Agriculture and Natural Resources, Février 2009
- **SMITH, VAL H.** Effects of Nitrogen: Phosphorus Supply Ratios on Nitrogen Fixation in Agricultural and Pastoral Ecosystems. *Biogeochemistry,* 1992, vol. 18 (1), 19-35
- **STEINER JL ; HH SCHOMBERG ; PW UNGER ; J CRESAP.** Biomass and Residue Cover Relationships of Fresh and Decomposing Small Grain Residue. *Soil Sci. Soc. Am. J.,* 2000, vol. 64, 2109-2114
- Measuring surface residue and calculating losses from décomposition and redistribution. **STEINER, JL ; HH SCHOMBERG ; JE MORRISON.** USDA-ARS Conservation Research Report. Crop Residue Management to Reduce Erosion and Improve Soil Quality: Southern Great Plains, 1994, 21-29
- **STEINER, JL ; HH SCHOMBERG ; PW UNGER.** *Residue Décomposition Submodel,* 1995, D1-D12
- Wind Erosion Prédiction System (WEPS). **L. J. HAGEN ; L. E. WAGNER ; J. TATARKO.** Technical Documentation. Beta Release. Wind Erosion Research Unit, 1995, 95-08
- Crop residue effects on water conservation. **STEINER, JL.** Managing Agricultural Residues. Lewis Publ, 1994, 41-76
- **STEINER, JL ; HH SCHOMBERG ; CL DOUGLAS JR ; AL BLACK.** Standing stem persistence in no-tillage small grain fields. *Agron. J.,* 1994, vol. 86, 76-81
- **THIBAUD MC ; C MOREL ; JC FARDEAU.** Contribution of phosphorus issued form crop residues to plant nutrition. *Soil Sci. Plant Nutr.,* 1988, vol. 34, 481-491
- **USSIRI, D. A ; P. N. S. MNKENI ; A. F. MACKENZIE ; J. M. R. SERAOKA.** Soil test calibration studies for formulation of phosphorus fertilizer recommendations for maize in Morogoro district, Tanzania. II. estimation of optimum fertilizer rates. *Communications in Soil Science and Plant Analysis,* 1998, vol. 29 (17-18), 2815-2828
- **VITOUSEK, PETER M. ; ROBERT W. HOWARTH.** Nitrogen Limitation on Land and in the Sea: How can It Occur. *Biogeochemistry,* 1991, vol. 13 (2), 87-115

- **WANG, Y.-P ; B. Z. HOULTON ; C. B. FIELD.** A model of biogeochemical cycles of carbon, nitrogen, and phosphorus including symbiotic nitrogen fixation and phosphatase production. *Global Biogeochemical Cycles,* 2007, vol. 21